# EUROPEAN PATENT SPECIFICATION

(11) **EP 4 088 492 B1**
(45) Date of publication and mention of the grant of the patent: **21.05.2025**
(21) Application number: 20789521.0
(22) Date of filing: 02.10.2020
(51) Int. Cl.: H04W 4/20, H04W 8/00, H04W 76/14, H04W 8/22, H04W 40/22, H04W 88/04

(54) **PATH SELECTION FOR SIDELINK COMMUNICATIONS IN NR NETWORK**
PFADSELEKTION FÜR SIDELINK-KOMMUNIKATION IN EINEM NR-NETZWERK
SÉLECTION DE CHEMIN POUR COMMUNICATIONS DE LIAISON LATÉRALE DANS UN RÉSEAU NR

(30) Priority: 07.01.2020 US 202062958011 P
(43) Date of publication of application: 16.11.2022
(73) Proprietor: Telefonaktiebolaget LM Ericsson (publ), 164 83 Stockholm (SE)
(72) Inventor: FU, Zhang, 120 78 Stockholm (SE); ZHANG, Congchi, 201204 Shanghai (CN); CONDOLUCI, Massimo, 169 31 Solna (SE); ERIKSSON, Anders E., 164 36 Kista (SE); LARSSON, Conny, 184 94 Åkersberga (SE)
(74) Representative: Ericsson
(86) International application number: PCT/EP2020/077678
(87) International publication number: WO 2021/139906

(56) References cited:
- WO-A1-2014/112834
- US-A1- 2019 281 582
- US-B2- 10 154 475
- US-B2- 9 936 530
- US-B2- 9 992 806
- VIVO: "Solution to support UE-to-UE Relay connection establishment", vol. SA WG2, no. Reno, USA; 20191118 - 20191122, 8 November 2019 (2019-11-08), XP051821567, Retrieved from the Internet <URL:https://ftp.3gpp.org/tsg_sa/WG2_Arch/TSGS2_136_Reno/Docs/S2-1911477.zip S2-1911477_23.752_5G ProSe_Solution for UE-to-UE Relay.docx> [retrieved on 20191108]
- CATT: "Solution to support UE-to-UE Relay", vol. SA WG2, no. Reno, USA; 20191118 - 20191122, 8 November 2019 (2019-11-08), XP051821543, Retrieved from the Internet <URL:https://ftp.3gpp.org/tsg_sa/WG2_Arch/TSGS2_136_Reno/Docs/S2-1911451.zip> [retrieved on 20191108]

## Description

### TECHNICAL FIELD

The present disclosure relates generally to device-to-device (D2D) communications in wireless communication networks and, more particularly, to path selection for D2D communications.

### BACKGROUND

The sidelink (SL) interface, introduced by the Third Generation Partnership (3GPP) project in Release 12 (Rel-12) of the Long Term Evolution (LTE) standard allows a user equipment (UE) to communicate directly with a peer UE without sending the packets to the network (NW). A UE-to-network relay solution is also defined such that a remote UE out of cell coverage can still reach the network via a relay UE. The remote UE communicates with the relay UE with the SL interface and the relay UE has uplink and downlink connection with the cell.

The first specification of the sidelink interface targeted mainly public uses cases. Since then, a number of enhancements have been introduced with the objective to enlarge the use cases that could benefit from the D2D technology. In particular, in LTE Release 14 Rel-14) and Release 15 (Rel-15), the extensions for the D2D framework focused on support for vehicle-to-everything (V2X) communications, including any combination of direct communications between vehicles, pedestrians and the infrastructure.

While LTE V2X mainly aims at traffic safety services, the implementation of V2X in the New Radio (NR) standard has a much broader scope including not only basic safety services but also non-safety applications, such as sensor/data sharing between vehicles, with the objective to strengthen the perception of the surrounding environment. Consequently, a new set of applications, such as vehicle platooning, cooperative maneuvering between vehicles and remote/autonomous driving may enjoy the enhanced sidelink framework.

Currently, the NR standard supports two Proximity Service (ProSe) discovery methods enabling a UE to discover neighboring UEs 30 in the proximity to the discovering UE. In a first model, referred to as Model A, an Announcing UE broadcast discovery messages at pre-defined discovery intervals to Monitoring UEs 30 its proximity that have permission to discover. The discovery message contains information that may be of interest to the Monitoring UEs 30. The Monitoring UE can respond if the discovery message contains information of interest to the Monitoring UE. Both open and restricted discovery types are supported by the Model A discovery method. In a second model, referred to as Model B, a Discoverer UE transmits a request containing information about its specific interests. A Discoveree UE that receives the request can respond with some information related to the interest of the Discoverer UE. For example, a Discoverer UE can include information in its request about a ProSe Application Identity corresponding to a group and the members of the group can respond. The Model B discovery method used for Public Safety is restricted. The Monitoring UE/Discoverer UE needs to have authorization (such as through pre-provisioned parameters) to perform discovery of the appropriate service(s).

D2D communication between two UEs 30 can be used to relay message from a UE outside the network coverage. The Model A or Model B discovery method can be used by an Announcing/Discoverer UE to discover a UE in its proximity serving as a UE-to-Network relay. A UE functioning as a UE-to-Network relay can attach to the network (if it is not already connected) and connect to a Packet Data network (PDN) connection enabling the necessary relay traffic.

3GPP contribution "Solution to support UE-to-UE Relay", document S2-1911451, 3GPP SA WG2 Meeting #136, Reno, USA (November 2019) describes including a relay indication into a unicast Direct Communication Request which is to a UE-to-UE Relay after its discovery. 3GPP contribution "Solution to support UE-to-UE Relay", document S2-1911477, 3GPP SA WG2 Meeting #136, Reno, USA (November 2019) describes including relay information into a broadcast Direct Communication Request. US 9,936,530 B2 describes D2D relay communication, in which a unicast Direct Communication Request sent after relay discovery includes a cause value to indicate that the requested one-to-one link has the purpose of relaying. US 10,154,475 B2 describes selection of a UE-to-network relay UE based on a discovery message. WO 2014/112834 A1 discloses a method for supporting group communication by a user equipment in a wireless communication system, wherein a user equipment decides to act as relay on a condition that a current hop count is less than a maximum number of allowed hops.

While some proposals have been made to support UE-to-UE relay, the existing solutions suffer from one or more drawbacks. Specifically, the existing solutions can result in undesirable delays for relay discovery, provide only limited capabilities, or require the UE to establish a unicast link to a relay in advance (which can result in additional delays and waste of resources). Additionally, the existing solutions do not provide support for relay selection by a remote UE. This limitation may cause issues as capabilities of the remote UE are not considered in the relay selection.

Accordingly, there remains a need for solutions that overcome the drawbacks of the prior art solutions.

### SUMMARY

The present disclosure provides methods and apparatus for establishing a unicast D2D communication link between a requesting UE and a remote UE via a relay UE. Specifically, the presently disclosed invention provides a method according to claim 1, a method according to claim 8, a UE according to claim 10, a computer program according to claim 12, a method according to claim 13, and a system according to claim 16. The dependent claims define further embodiments of the invention.

### BRIEF DESCRIPTION OF THE DRAWINGS

Figure 1 illustrates a wireless communication network supporting UE-to-UE relay as herein described.
Figure 2 illustrates NR unicast links between two UEs 30 for D2D communication.
Figure 3 illustrates the Model A ProSe discovery procedure.
Figure 4 illustrates the Model B ProSe discovery procedure.
Figure 5 illustrates a procedure for ProSe UE-to-Network relay.
Figures 6A and 6B illustrate public safety direct discovery with Model A and Model B respectively.
Figure 7 illustrates a Layer-2 link establishment procedure for D2D communication.
Figure 8A illustrates a procedure for unicast link establishment with a remote UE without relay discovery.
Figure 8B illustrates another procedure for unicast link establishment with a remote UE without relay discovery.
Figure 8C illustrates another procedure for unicast link establishment with a remote UE without relay discovery.
Figure 9 illustrates a procedure for unicast link establishment with a remote UE with relay discovery.
Figure 10 illustrates a method of D2D communication implemented by a requesting UE.
Figure 11 illustrates a method implemented by a relay UE of supporting D2D communication between a requesting UE and a remote UE.
Figure 12 illustrates a method of D2D communication implemented by a requesting UE.
. Figure 13 illustrates a method of D2D communication implemented by a requesting UE.
Figure 14 illustrates a method implemented by a relay UE of supporting D2D communication between a requesting UE and a remote UE.
Figure 15 illustrates a method of D2D communication implemented by a remote UE.
Figure 16A illustrates a requesting UE configured for D2D communication.
Figure 16B illustrates a relay UE supporting D2D communication between a requesting UE and a responding UE.
Figure 16C illustrates a remote UE configured for D2D communication.
Figure 17A illustrates a requesting UE configured for D2D communication.
Figure 17B illustrates a relay UE supporting D2D communication between a requesting UE and a remote UE.
Figure 17C illustrates a remote UE configured for D2D communication via a relay UE.
Figure 18 illustrates a UE configured for D2D communications using a relay.

### DETAILED DESCRIPTION

Referring now to the drawings, UE-to-UE relay techniques according to the present disclosure will be described in the context of a wireless communication network implementing the NR communications standard. Those skilled in the art will appreciate, however, that the techniques are more generally applicable to any wireless communication networks supporting D2D communications over a sidelink interface.

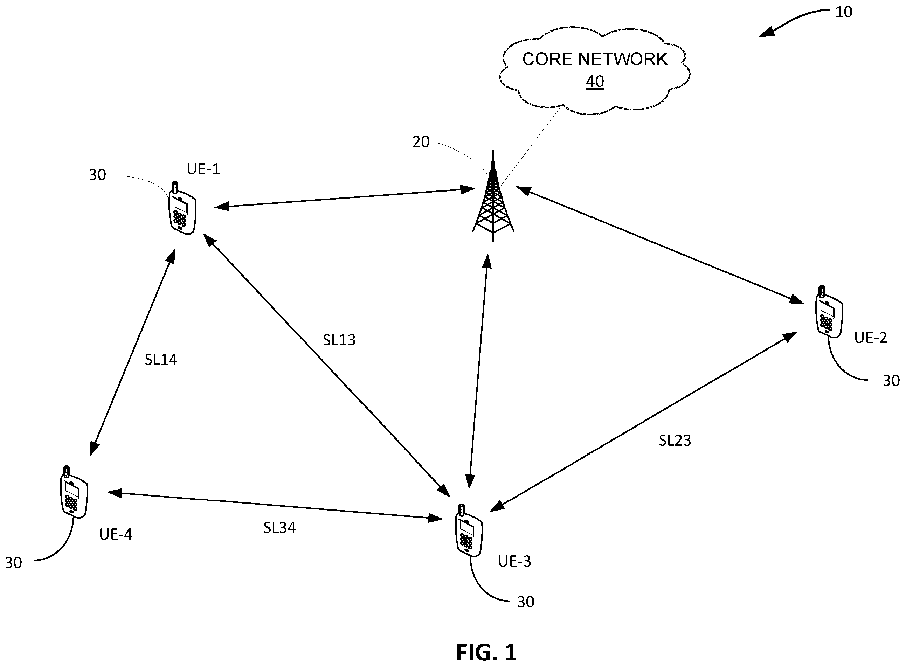

Figure 1 illustrates a base station 20 that provides connection for a plurality of UEs 30 to a core network 40. Although a single base station 20 is shown in Figure 1, those skilled in the art will appreciate that the wireless communication network 10 will typically include many base stations 20. The base stations 20 may also be referred to in the NR standards as Evolved Node Bs (eNBs), 5G Node Bs (gNBs) or Next Generation eNBs (ng-eNBs).

Figure 1 illustrates four UEs 30, denoted respectively as UE-1 - UE-4. UE-1 - UE-3 are within the coverage area of the base station 20 and are capable of establishing a packet data network (PDN) connection with the network 10. UE-4 is outside the coverage area of the base station 20.

UE-1 - UE-4 are capable of D2D communications over a sidelink (e.g., PC5 interface) with other UEs 30 in their proximity. UE-1 is in the proximity of UE-3 and UE-4 and can communicate over sidelinks SL13 and SL14 with UE-3 and UE-4 respectively. UE-2 is in the proximity of UE-3 and can communicate with UE-3 over sidelink SL 23. UE-3 is in the proximity of UE-1, UE-2 and UE-4 and can communicate with them respectively over the sidelinks SL13, SL23, and SL34. Finally, UE-4 is in the proximity of UE-1 and UE-3 and can communicate over sidelinks SL14 and SL34 with UE-1 and UE-3 respectively. UE 1 and UE-4, however, are outside the range of UE-2 and are unable to establish a direct connection with UE-2 over a sidelink. UE 1 could communicate with UE-2 via base station 20. However, UE-4 is outside the coverage of the base station 20.

One aspect of the disclosure comprises methods to enable UE-to-UE relay for D2D communications. In the example shown in Figure 1, the D2D communication techniques allow UE-3 to serve as a relay for D2D communications between UE-2 and UE-4 or between UE-2 and UE-1.

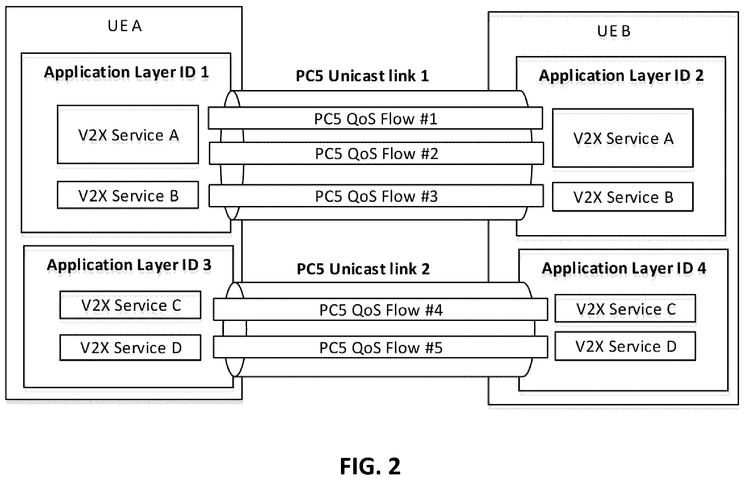

For NR sidelink, unicast at access stratum is supported for services requiring high reliability. Between the same UE pair, there can be multiple sidelink unicast links and each unicast link can support multiple sidelink Quality of Service (QoS) flows/radio bearers as illustrated in Figure 2 (3GPP TS 23.287). At access stratum, each link can be identified by the source and destination Layer 2 identity (L2 ID). For instance, the PC5 unicast link 1 in Figure 2 can be identified by the pair of L2 ID1 (i.e., corresponding to application ID1) and L2 ID2 (i.e. corresponding to application ID2).

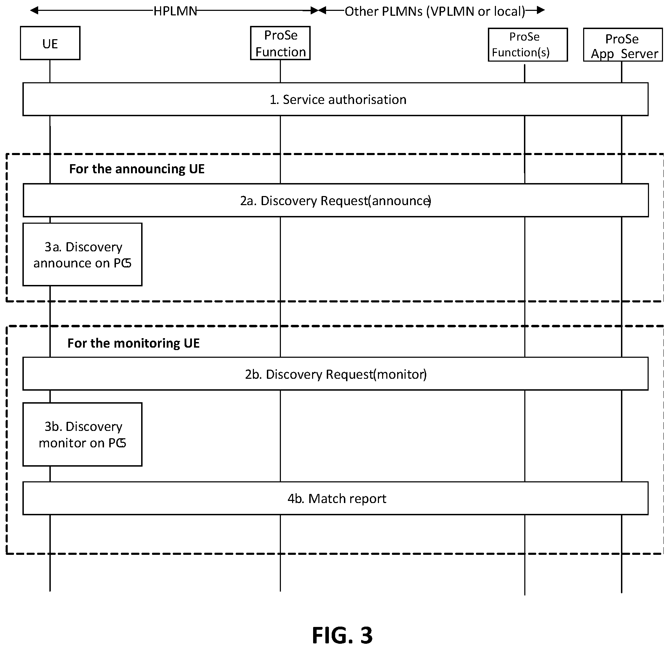

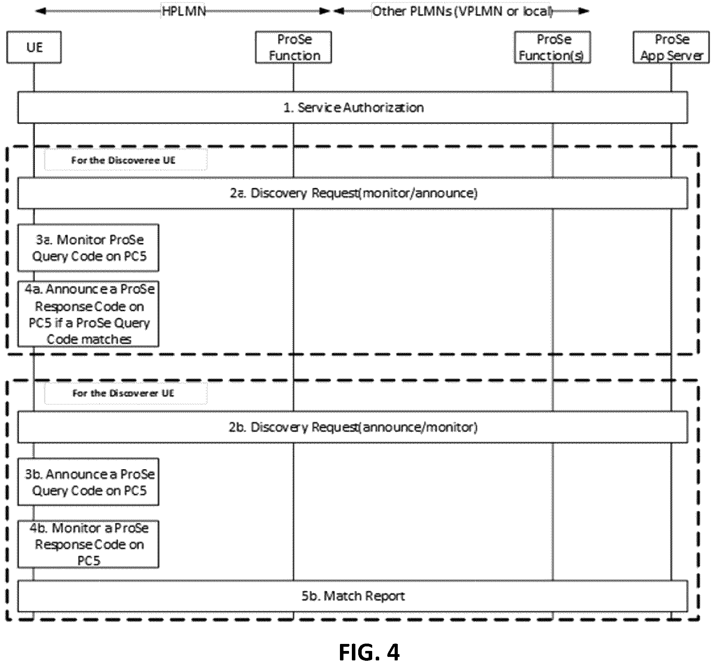

To enable D2D communications between UEs 30, a discovery method is needed to enable the UEs 30 to discover one another. Two ProSe Discovery methods are defined in 3GPP standard TS 23.303, §5.3.1.2: the Model A discovery method (Figure 3) and the Model B discovery method (Figure 4).

Model A defines two roles for the ProSe-enabled UEs 30 that are participating in ProSe Direct Discovery.
- Announcing UE: The UE 30 that announces certain information that could be used by UEs 30 in proximity that have permission to discover.
- Monitoring UE: The UE 30 that monitors certain information of interest in proximity of announcing UEs 30.

In this model, the Announcing UE 30 broadcasts discovery messages at pre-defined discovery intervals and the Monitoring UEs 30 that are interested in these messages read them and process them. This model is equivalent to "I am here" because the Announcing UE 30 would broadcast information about itself, e.g., its ProSe Application Code in the discovery message. Both open and restricted discovery types are supported by Model A.

The Model B discovery method is shown in Figure 4. When restricted discovery type is used, this model defines two roles for the ProSe-enabled UEs 30 that are participating in ProSe Direct Discovery.
- Discoverer UE: The UE 3 that transmits a request containing certain information about what it is interested to discover.
- Discoveree UE: The UE 30 that receives the request message can respond with some information related to the discoverer's request.

In this model, the request by the Discoverer UE 30 includes information about other UEs 30 with which it would like to communicate. It is equivalent to " who is there/are you there" because the Discoverer UE 30 sends information about other UEs 30 from which the Discoverer UE 30 would like to receive responses. For example, the information can be about a ProSe Application Identity corresponding to a group and the members of the group can respond. The Public Safety discovery is considered restricted. The Monitoring UE 30/Discoverer UE 30 needs to have authorization (such as through pre-provisioned parameters) to perform discovery of the appropriate service(s).

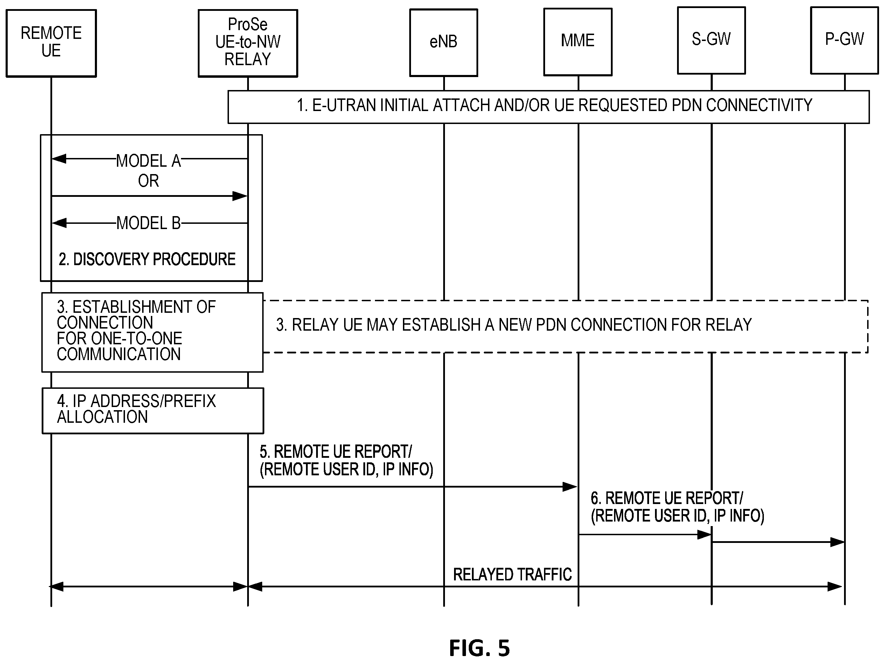

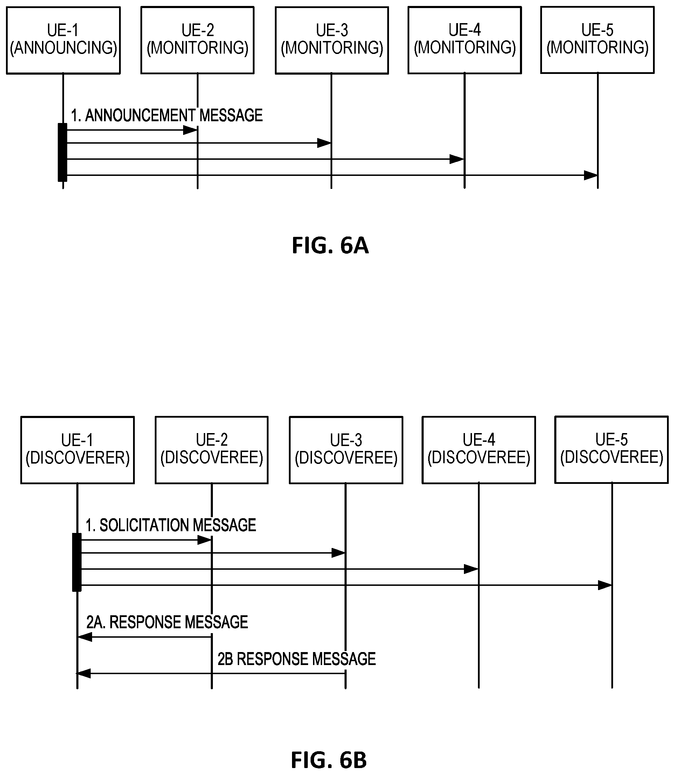

The current standard provides support for direct communication via ProSe UE-to-Network Relay (TS 23.303, §5.4.4). With this procedure, a ProSe UE-to-Network Relay capable UE 30 can attach to the network (if it is not already connected) and connect to a PDN connection enabling the necessary relay traffic. Figure 5 shows the call flow of a procedure for ProSe UE-to-Network Relay. In this procedure, a remote UE 30 performs discovery of a ProSe UE-to-Network Relay using Model A (Figure 6A) or Model B (Figure 6B) discovery. The details of this procedure are described in TS 23.303, §5.3.7.

Briefly, the remote UE 30 performs discovery of a ProSe UE-to-Network Relay using Model A (Figure 6A) or Model B (Figure 6B) discovery. The details of this discovery procedure are described in TS 23.303, §5.3.7. The identifiers for ProSe UE-to-Network Relay discovery and selection are defined in TS23.303, § 4.6.4.3. The following parameters are used in the UE-to-Network Relay Discovery Announcement message (Model A):
- ProSe Relay UE ID: link layer identifier that is used for direct communication and is associated with a Relay Service Code. A UE-to-Network Relay shall have a distinct ProSe Relay UE ID for each Relay Service Code. For support of multiple PDN Connections, the ProSe UE-to-Network Relay is assigned a different ProSe Relay UE ID for each PDN Connection.
- Announcer Info: provides information about the announcing user.
- Relay Service Code: parameter identifying a connectivity service the ProSe UE-to-Network Relay provides to Public Safety applications. The Relay Service Codes are configured in a ProSe UE-to-Network Relay for advertisement. Additionally, the Relay Service Code also identifies authorized users the ProSe UE-to-Network Relay would offer service to, and may select the related security policies or information, e.g., necessary for authentication and authorization between the Remote UE 30 and the ProSe UE-to-Network Relay (e.g., a Relay Service Code for relays for police members only would be different than a Relay Service Code for relays for Fire Fighters only, even though potentially they provided connectivity to same APN, e.g., to support Internet Access).

The following parameters are used in the UE-to-Network Relay Discovery Solicitation message (Model B):
- Discoverer Info: provides information about the discoverer user.
- Relay Service Code: information about connectivity that the Discoverer UE 30 is interested in. The Relay Service Codes are configured in the Remote UEs 30 interested in related connectivity services.
- ProSe Relay UE ID: link layer identifier of a UE-to-Network Relay that is used for direct communication and is associated with a Relay Service Code. A UE-to-Network Relay shall have a distinct ProSe Relay UE ID for each Relay Service Code. The ProSe Relay UE ID is optional.

The following parameters are used in the UE-to-Network Relay Discovery Response message (Model B):
- ProSe Relay UE ID: link layer identifier that is used for direct communication and is associated with a Relay Service Code. A UE-to-Network Relay shall have a distinct ProSe Relay UE ID for each Relay Service Code.

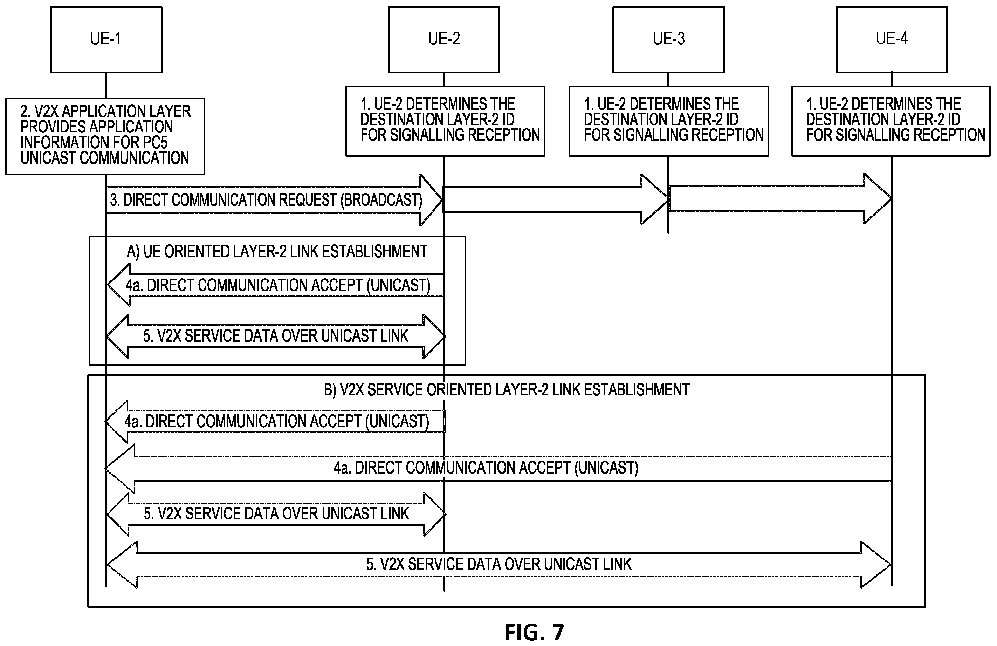

Figure 7 illustrates the layer-2 (L2) link establishment procedure for unicast mode of V2X communication over PC5 reference point.
1. The UE(s) 30 determine the destination Layer-2 ID for signaling reception for PC5 unicast link establishment as specified in in TS 23.287, §5.6.1.4. The destination Layer-2 ID is configured with the UE(s) 30 as specified in TS 23.287, §5.1.2.1.
2. The V2X application layer in UE-1 provides application information for PC5 unicast communication. The application information includes the service type(s) (e.g., PSID or ITS-AID) of the V2X application and the requesting UE's Application Layer ID. The target UE's Application Layer ID may be included in the application information.
   - The V2X application layer in UE-1 may provide V2X Application Requirements for this unicast communication. UE-1 determines the PC5 QoS parameters and PFI as specified in TS 23.287, §5.4.1.4.
3. UE-1 sends a Direct Communication Request message to initiate the unicast layer-2 link establishment procedure. The Direct Communication Request message includes:
   - Source User Info: the requesting UE's Application Layer ID (i.e. UE-1's Application Layer ID).
   - If the V2X application layer provided the target UE's Application Layer ID in step 2, the following information is included:
      ∘ Target User Info: the target UE's Application Layer ID (i.e. UE-2's Application Layer ID).
   - V2X Service Info: the information about V2X Service(s) requesting Layer-2 link establishment (e.g., PSID(s) or ITS-AID(s)).
   - Indication whether IP communication is used.
   - IP Address Configuration: For IP communication, IP address configuration is required for this link and indicates one of the following values:
      ∘ "IPv6 Router" if IPv6 address allocation mechanism is supported by the requesting UE 30, i.e., acting as an IPv6 Router; or
      ∘ "IPv6 address allocation not supported" if IPv6 address allocation mechanism is not supported by the requesting UE 30.
   - Link Local IPv6 Address: a link-local IPv6 address formed locally based on RFC 4862 if UE-1 does not support the IPv6 IP address allocation mechanism, i.e. the IP Address Configuration indicates "IPv6 address allocation not supported".
   - QoS Info: the information about PC5 QoS Flow(s). For each PC5 QoS Flow, the PFI and the corresponding PC5 QoS parameters (i.e. PQI and conditionally other parameters such as MFBR/GFBR, etc.).
   - The source Layer-2 ID and destination Layer-2 ID used to send the Direct Communication Request message are determined as specified in clauses 5.6.1.1 and 5.6.1.4.
   - UE-1 sends the Direct Communication Request message via PC5 broadcast using the source Layer-2 ID and the destination Layer-2 ID.
4. A Direct Communication Accept message is sent to UE-1 as below:
   4a. (UE oriented Layer-2 link establishment) If the Target User Info is included in the Direct Communication Request message, the target UE 30, i.e. UE-2 responds with a Direct Communication Accept message.
   4b. (V2X Service oriented Layer-2 link establishment) If the Target User Info is not included in the Direct Communication Request message, the UEs 30 that are interested in using the announced V2X Service(s), so decide to establish Layer-2 link with UE-1 respond to the request by sending a Direct Communication Accept message (UE-2 and UE-4 in Figure 6.3.3.1-1).
   The Direct Communication Accept message includes:
      - Source User Info: Application Layer ID of the UE 30 sending the Direct Communication Accept message.
      - QoS Info: the information about PC5 QoS Flow(s). For each PC5 QoS Flow, the PFI and the corresponding PC5 QoS parameters requested by UE-1 (i.e. PQI and conditionally other parameters such as MFBR/GFBR, etc.).
      - IP Address Configuration: For IP communication, IP address configuration is required for this link and indicates one of the following values:
         ∘ "IPv6 Router" if IPv6 address allocation mechanism is supported by the target UE 30, i.e., acting as an IPv6 Router; or
         ∘ "IPv6 address allocation not supported" if IPv6 address allocation mechanism is not supported by the target UE 30.
      - Link Local IPv6 Address: a link-local IPv6 address formed locally based on RFC 4862 if the target UE 30 does not support the IPv6 IP address allocation mechanism, i.e. the IP Address Configuration indicates "IPv6 address allocation not supported", and UE-1 included a link-local IPv6 address in the Direct Communication Request message. The target UE 30 shall include a non-conflicting link-local IPv6 address.
      - If both UEs 30 (i.e. the requesting UE 30 and the target UE 30 selected to use link-local IPv6 address, they shall disable the duplicate address detection defined in RFC 4862.
   NOTE 1: When either the requesting UE 30 or the target UE 30 indicates the support of IPv6 router, corresponding address configuration procedure would be carried out after the establishment of the layer 2 link, and the link-local IPv6 addresses are ignored.
      - The source Layer-2 ID used to send the Direct Communication Accept message is determined as specified in clauses 5.6.1.1 and 5.6.1.4. The destination Layer-2 ID is set to the source Layer-2 ID of the received Direct Communication Request message.
      - Upon receiving the Direct Communication Accept message from peer UE 30, UE-1 obtains the peer UE's Layer-2 ID for future communication, for signaling and data traffic for this unicast link.
      - The V2X layer of the UE 30 that established PC5 unicast link passes the PC5 Link Identifier assigned for the unicast link and PC5 unicast link related information down to the AS layer. The PC5 unicast link related information includes Layer-2 ID information (i.e. source Layer-2 ID and destination Layer-2 ID). This enables the AS layer to maintain the PC5 Link Identifier together with the PC5 unicast link related information.
5. V2X service data is transmitted over the established unicast link as below:
   - The PC5 Link Identifier and PFI are provided to the AS layer, together with the V2X service data.
   - UE-1 sends the V2X service data using the source Layer-2 ID (i.e. UE-1's Layer-2 ID for this unicast link) and the destination Layer-2 ID (i.e. the peer UE's Layer-2 ID for this unicast link).
NOTE 2: PC5 unicast link is bi-directional, therefore the peer UE 30 of UE-1 can send the V2X service data to UE-1 over the unicast link with UE-1.

One aspect of the present disclosure is to provide support for UE-to-UE relay. While some proposals have been made to support UE-to-UE relay, the existing solutions suffer from one or more drawbacks. Specifically, the existing solutions can result in undesirable delays for relay discovery, provide only limited capabilities, or require the UE 30 to establish a unicast link to a relay in advance (which can result in additional delays and waste of resources). Additionally, the existing solutions do not provide support for relay selection by a remote UE 30. This limitation may cause issues as capabilities of the remote UE 30 are not considered in the relay selection.

The solutions herein described reuse service discovery and unicast link establishment methods defined in TS 23.303 and TS 23.287 with a few modifications so the impact to the corresponding products is small. The methods support relay selection by both the requesting UE 30 and the remote UE 30, also referred to herein as the target UE 30, allowing consideration of the status of remote UE 30 for relay selection. Also, new timers are introduced for collecting requests and responses from relays in order to perform the relay selection. The methods herein described also allow more information to be exchanged by potential relays in order to support the implementation of more complex relay selection approaches. For example, the methods herein described can support load balancing and other relay selection policies.

One aim of the techniques herein described is to ensure the relay discovery between the requesting UE 30 and the target UE 30 shall not be dependent on how the relay UE 30 forwards traffic between the requesting UE 30 and the target UE 30, e.g., L2 or L3 relaying. The techniques rely on the concept that UE-to-UE discovery and selection can be integrated into the unicast link establishment procedure as described in clause 6.3.3 of TS 23.287.

In the following description, a UE 30 that initiates communication with a remote UE 30 is referred to a requesting UE 30 or initiating UE 30. The remote UE 30 is also referred to herein as the target UE 30. A UE 30 that serves as a UE-to-UE relay is called a relay UE 30.

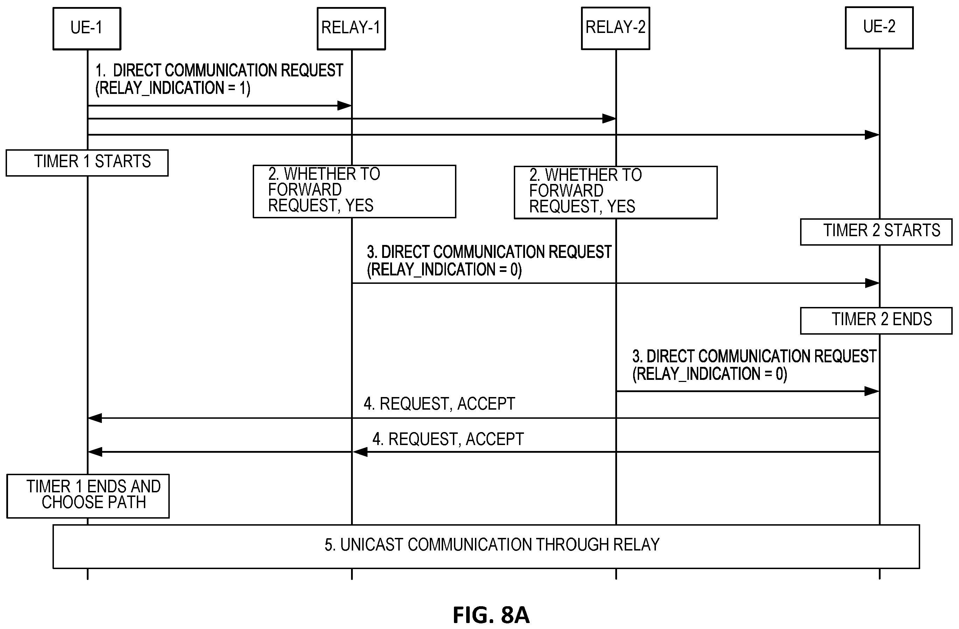

Figures 8A - 8C illustrate unicast link establishment procedures for establishing a unicast link with a remote UE 30 without relay discovery. The requesting UE 30 (also referred to herein as the originating UE 30 or initiating UE 30) is denoted UE-1 and the remote UE 30 (also referred to as the target UE 30 or responding UE 30) is denoted UE-2. When the requesting UE 30 (e.g., UE-1 in Figures 8A - 8C) wants to establish a unicast communication with the remote UE 30 (UE-2 in Figures 8A-8C), the requesting UE 30 broadcasts a Direct Communication Request as defined in TS23.303 or Solicitation message. The Direct Communication Request or Solicitation message is modified to include a new field called *relay_indication* to indicate whether relays are allowed for the communication. The *relay_indication* field also indicates a maximum number of hops allowed for a communication path between the requesting UE 30 and the remote UE 30. For Release 17, it is assumed that the value of the indication is restricted to single hop.

The value of the *relay_indication* field could be 0 or a positive integer, e.g., 1, 2,...,n. In one example, the requesting UE 30 selects a *relay_indication* value between 0 and M selected by UE 30, where M represents an upper bound. The *relay_indication* value can be regarded the maximum number of relays allowed by the requesting UE 30, i.e., a value of 0 means that no relays are allowed (relaying is not admitted), a value of 1 means that only one relay is allowed (UE-relay-UE), and so on. The maximum number of hops allowed is the number of relays plus 1, with 1 being the direct communication path between the requesting UE 30 and the remote UE 30. This value can be set according to several approaches. In one approach, the *relay_indication* value could be set by application to which the link establishment refers and could vary according to application type. In another approach, the *relay_indication* value could be set as feature of the chipset. In another approach, *relay_indication* value could be set by the network according to pre-configured (e.g., SIM-based or via network signaling) or dynamic policies (e.g., via network signaling) that vary depending on the different applications.

In some embodiments, the *relay_indication* field may be a Boolean value (True or False) indicating whether relaying is allowed. A Boolean value equal to True indicates that relaying is allowed. A Boolean value of False indicates that relaying is not allowed.

When a potential UE-to-UE relay receives a Direct Communication Request or Solicitation message with *relay_indication* greater than 0, it decides whether to forward (i.e., broadcast this message to its neighborhood). The decision whether to forward or rebroadcast the Direct Communication Request could, for example, be based on factors such as QoS requirements in the request, the current traffic load of the relay, the link quality between the requesting UE 30 and the relay UE 30 (e.g., determined by measuring the received power of the request message), or some other policies (e.g., it only serves some specific UEs 30). Different forwarding approaches could be used for different requests. The approach followed for forwarding the request could be driven by chipset design or driven by applications decision.

If the potential relay decides to forward/rebroadcast the request, it will decrease the *relay_indication* value by 1. When forwarding a received request, the potential relay doesn't change any parameter included in the received request except for the *relay_indication* value when integer values are used. The potential relay could though append additional information to the received request such as relay load info, relay QoS support, etc.

If a relay receives a Direct Communication Request or Solicitation message with a *relay_indication* value of 0 and the relay is not the target of the request, the relay can drop the message. If a relay receives a communication request (e.g., can be identified by some request ID) which it has already forwarded before, then it can drop the current one.

There may be scenarios where multiple relay UEs 30 can be used to reach the target UE 30, or the target UE 30 may also directly receive the Direct Communication Request or Solicitation message from the requesting UE 30. The target UE 30 may choose which one to reply to according to factors such as signal strength, local policy (e.g., traffic load of the relay UEs 30) or operator policies (e.g., always prefer direct communication or only use some specific relay UEs 30).

The requesting UE 30 may also receive a response message from multiple relay UEs 30 and also from the target UE 30 directly. In this case, the source UE 30 chooses the communication path according to factors such as signal strength, local policy (e.g.,. traffic load of the relay UEs 30) or operator policies (e.g., always prefer direct communication or only use some specific relay UEs 30).

Referring to Figure 8A, it is assumed in this example that Relay-1, Relay-2 and UE-2 are directly reachable by UE-1 (the requesting UE 30). Relay-1 and Relay-2 are all willing to forward Direct Communication Request messages from UE-1. UE-2 (the remote UE 30) can also be reachable by Relay-1 and Relay-2.

In step 1, UE-1 wants to establish unicast communication with UE-2 and the communication can be either through a direct link with UE-2 or via a UE-to-UE relay. UE-1 broadcasts a Direct Communication Request with a *relay_indication =* 1. The Direct Communication Request may also include a request identifier (ID). When UE-1 broadcasts the Direct Communication Request, it can optionally start a timer, denoted as Timer1, which sets an upper bound on the time period UE-1 will wait for a response. The Direct Communication Request is received by Relay-1, Relay-2 and UE-2. Note that UE-1 need not know the identity of the remote UE 30. The request may optionally include an identifier for UE-2 if UE-1 is aware of UE-2 based on a priori information or may include other information about the intended target.

In step 2, Relay-1 and Relay-2 decides to forward/broadcast the Direct Communication Request from UE-1. Relay-1 and Relay-2 both rebroadcast the same Direct Communication Request to neighboring UEs 30 with *relay_indication*=0. If another relay receives this message, it will just drop it. For example, if Relay-2 receives the rebroadcast message from Relay-1, Relay-2 will recognize the request ID as matching the previously forwarded request and drop the message.

In step 3, UE-2 receives copies of the Direct Communication Requests directly from UE-1, Relay-1 and Relay-2. Now there are three paths through which UE-1 can reach UE-2; the direct path, via Relay-1 and via Relay-2. In various embodiments of this method, the communication path for the communication between UE-1 and UE-2 can be selected by UE-2 (the remote UE 30), UE-1 (the requesting UE 30), or by a combination of UE-1 and UE-2.

In embodiments where the remote UE 30 selects the communication path, it will start a timer, denoted Timer2 in Figure 8A, after it receives the first copy of the Direct Communication Request. In this example, the first copy received is the request directly from UE-1. The timer establishes an upper bound on the delay while the remote UE 30 collects copies of the Direct Communication Requests propagating along different paths. The value of the timer could be a chipset implementation, set by an application or provided by the network (e.g., pre-configured or provided via network signaling). Any copy of the request received after the timer expires can be ignored. In the example shown in Figure 8A, the copy of the Direct Communication Request from Relay-2 is ignored because it arrives after Timer2 expires.

After Timer2 ends, UE-2 decides which request to reply to, based on factors such as signal strength (determined by measuring the strength of the received request), load on the relay (added to the request by the relay UE 30), local policy (e.g., provided by an application or chipset design) or operator policies (pre-configured or provided via network signaling). Examples of selection criterion comprise, for instance, selecting the request with the highest signal strength, selecting the request with the highest value of *relay_indication* parameter (meaning that is the request that has been forwarded the fewest number of times, potentially indicating the shortest path). Decisions can also be based on a combination of factors. For example, if multiple requests have the same *relay_indication* value, the request associated to highest signal strength could be selected.

As previously noted, when a potential relay forwards the Direct Communication Request, it can also add more information into the message, such as load information, QoS support, etc. In this case, the remote UE can use that information to choose the communication path. For example, if two requests with the same *relay_indication* value have been received, the remote UE 30 can select the one with the lightest load.

In some embodiments, the remote UE 30 can be configured to always choose the path from which it receives the first copy of the request. In this case, Timer2 is not needed. Rather, the remote UE 30 directly chooses the path of the first received request and drops any subsequent requests that it receives having the same request ID. Also, if the remote UE 30 policy is to always choose the path associated to the smallest number of hops from the requesting UE 30, the remote UE 30 can directly select a request received by the requesting UE 30. In this case, the remote UE 30 can stop Timer2 and ignore subsequent requests with the same request ID. In another example, when the remote UE 30 (i.e., UE-2) receives a Direct Communication Request from the requesting UE 30 (e.g., UE-1) implying a good direct link between UE-1 and UE-2 available, UE-2 may accept the request, stop Timer2 and not process other requests forwarded from relay UEs 30.

In some embodiments, the remote UE 30 could be configured to select one or more communications paths for the same connection. In this case, the remote UE 30 could reply to multiple Direct Communication Requests, which are selected according to policies in a similar way as in case of replying to only one request (i.e., reply to the first two received requests, etc.). In this case, the requesting UE 30 could be configured to use multiple communication paths when two or more paths are selected by the remote UE 30. Alternatively, the requesting UE 30, can be configured to optionally select a single communication path (or less than all of the indicated communication paths) from the set of communication paths indicated by the remote UE 30.

In the example shown in Figure 8A, it is assumed that UE-2 wants to setup a multi-link connection. Therefore, at step 4, UE-2 replies to the Direct Communication Request received directly from UE-1 and as well as the Direct Communication Request received via Relay-1 by sending a Request Accept message over the direct communication path and via Relay-1. When Timer1 ends, UE-1 determines the communication path to use for D2D communication with UE-2. In this example, it is assumed that both responses are received prior to the expiration of Timer1. In some embodiments, the requesting UE 30 can be configured to always use multiple communication paths for communication with the remote UE 30 when the remote UE 30 has selected multiple paths. In other embodiments, the requesting UE 30 can be configured to select which of the multiple communication paths indicated by the remote UE 30 to use for D2D communication with the remote UE 30. In step 5, UE-1 and UE-2 engage in unicast communication using the selected path or paths.

In some embodiments, path selection is performed by the requesting UE 30. In this embodiment, UE-1 starts Timer1 when it broadcasts the Direct Communication Request and waits for a response. When Timer1 expires, UE-1 determines which communication path to use for communication with UE-2 based on any Request Accept messages received prior to the timer expiration. In the example shown in Figure 8A, UE-2 responds at step 4 to the Direct Communication Request received directly from UE-1 and to the Direct Communication Request received via Relay-1. UE-1 receives both responses prior to the expiration of Timer1; one directly from UE-2 and one via Relay-1. The requesting UE 30 can select the communication path based on factors such as signal strength, load on the relay (added by the relay to the Request Accept message), QoS support by the relay (added by the relay to the Request Accept message), local policy (e.g., provided by an application or chipset design) or operator policies (pre-configured or provided via network signaling). Examples of selection criterion comprise, for instance, selecting the communication path associated with the highest signal strength, selecting the communication path with the lightest load on the relay, selecting the direct path if available. Decisions can also be based on a combination of factors. For example, the requesting UE 30 can be configured to select the direct path if it meets a minimum signal quality standard, or to select the relay with the lightest load that meets the minimum signal quality standard.

In some embodiments, the requesting UE 30 can be configured to always choose the path over which it receives the first Request Accept message. In this case, the requesting UE 30 can stop Timer1 and ignore any subsequent Request Accept messages received after the first. In another example, when the requesting UE 30 (i.e., UE-2) receives a Direct Communication Request from the remote UE 30 (e.g., UE-1) implying a good direct link between UE-1 and UE-2 available, UE-1 may immediately select the direct communication path without waiting for Timer1 to expire and stop Timer1. In step 5, UE-1 and UE-2 engage in unicast communication using the selected path or paths.

In some embodiments, the path selection may be performed in part by the remote UE 30 and in part by the requesting UE 30 where the remote UE 30 has indicated multiple paths available for the communication. In this case, the remote UE 30 is configured to select one or more preferred paths. When the requesting UE 30 receives multiple Request Accept messages in response to a Direct Communication Request, it has the option to select from the available communication paths indicated by the remote UE 30. The requesting UE 30 could select all of the communication paths indicated by the remote UE 30, or some number less than all of the communication paths. In step 5, UE-1 and UE-2 engage in unicast communication using the selected path or paths.

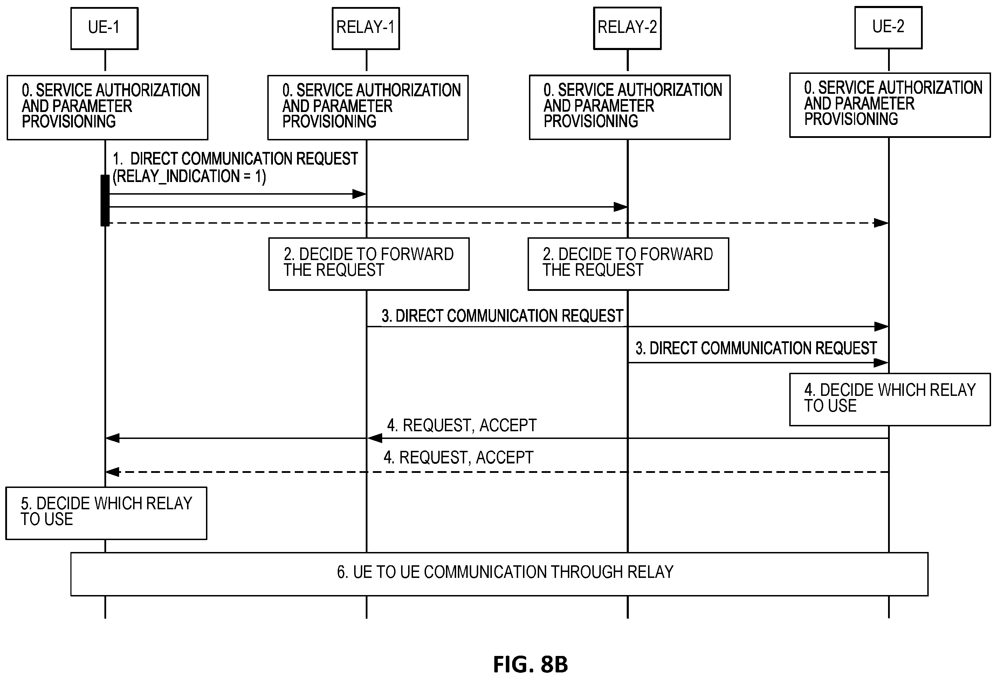

Referring to Figure 8B, it is assumed in this example that Relay-1, Relay-2 and UE-2 are directly reachable by UE-1 (the requesting UE 30). Relay-1 and Relay-2 are willing to forward Direct Communication Requests from UE-1. UE-2 (the remote UE 30) can also be reachable by Relay-1 and Relay-2.

In step 0, UEs 30 are authorized to use the service provided by the UE-to-UE relays. UE-to-UE relays are authorized to provide service of relaying traffic among UEs 30. The authorization can be done when UEs/relays are registered to the network. Security related parameters may be provisioned so that a UE 30 and a relay can verify the authorization of each other if needed.

In step 1, UE-1 wants to establish unicast communication with UE-2 and the communication can be either through a direct link with UE-2 or via a UE-to-UE relay. UE-1 broadcasts a Direct Communication Request with a *relay_indication* set to 'enabled.' The Direct Communication Request may also include a request identifier (ID). The Direct Communication Request is received by Relay-1, Relay-2. The Direct Communication Request may also be received by UE-2 is it is in close proximity to UE-1.

In step 2, Relay-1 and Relay-2 decide to forward/broadcast the Direct Communication Request from UE-1. Relay-1 and Relay-2 both broadcast the same Direct Communication Request to neighboring UEs 30 without a *relay_indication.* If another relay receives this message, it will just drop it. For example, if Relay-2 receives the rebroadcast message from Relay-1, Relay-2 will recognize the request ID as matching the previously forwarded request and drop the message. When a relay forwards the Direct Communication Request, it includes its Relay ID or Relay UE info in the message.

In step 3, UE-2 receives copies of the Direct Communication Requests from Relay-1 and Relay-2.

In step 4, UE-2 chooses Relay-1 and replies with Request Accept message via Relay-1. When Relay-1 forwards the Request Accept message, it also includes its Relay ID or Relay UE info in the message. If UE-2 directly receives the Direct Communication Request from UE-1, it may choose to setup a direct communication link by sending the Request Accept directly to UE-1.

In step 5, UE-1 receives the Request Accept from Relay-1. UE-1 chooses a path according to policies (e.g., always choose direct path if it is possible), signal strength, etc. If UE-1 receives a Request Accept directly from UE-2, it may choose to setup a direct L2 link as described in clause 6.3.3 of TS 23.287. In this case, step 6 is skipped.

In step 6, UE-1 and UE-2 setup a communication link through chosen the UE-to-UE relay. The link setup information may vary depending on the type of relay, e.g., L2 or L3 relaying.

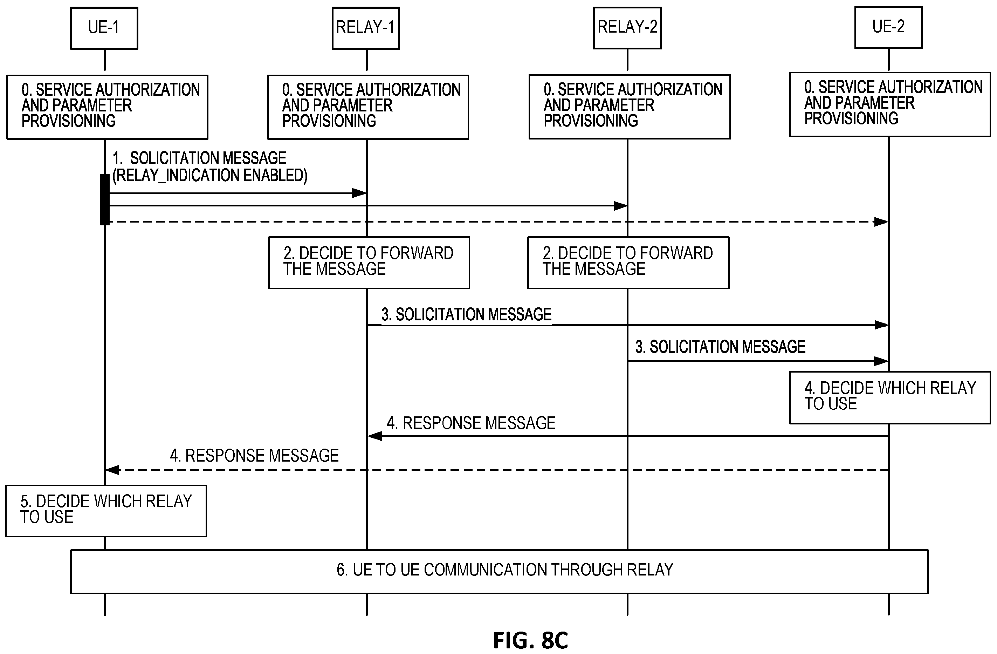

Referring to Figure 8C, it is assumed that Relay-1, Relay-2 and UE-2 are directly reachable by UE-1 (the requesting UE 30). Relay-1 and Relay-2 are all willing to forward Direct Communication Request from UE-1. UE-2 (the remote UE 30) can also be reachable by Relay-1 and Relay-2.

In step 0, UEs 30 are authorized to use the service provided by the UE-to-UE relays. UE-to-UE relays are authorized to provide service of relaying traffic among UEs 30. The authorization can be done when UEs/relays are registered to the network. Security related parameters may be provisioned so that a UE 30 and a relay can verify the authorization of each other if needed.

In step 1, UE-1 wants to establish unicast communication with UE-2 and the communication can be either through a direct link with UE-2 or via a UE-to-UE relay. UE-1 broadcasts a Solicitation message with a *relay_indication* set to 'enabled'. The Solicitation message may also include a request identifier (ID). The Solicitation message is received by Relay-1 and Relay-2. The Solicitation message includes, UE-2 ID or UE-2 Application User Info, UE-1 ID or UE-1 Application User Info. The message may also be received by UE-2 if it is in the proximity of UE-1.

In step 2, Relay-1 and Relay-2 decides to forward/broadcast the Solicitation message from UE-1. Relay-1 and Relay-2 both broadcast the Solicitation message to neighboring UEs 30 without a *relay_indication.* If another relay receives this message, it will just drop it. When a relay forwards the Solicitation message, it includes its Relay ID or Relay UE info in the message.

In step 3, UE-2 receives copies of the Solicitation message from Relay-1 and Relay-2.

In step 4, UE-2 chooses Relay-1 and replies with a Response message via Relay-1. When Relay-1 forwards the Response message, it also includes its Relay ID or Relay UE info in the message. If UE-2 directly receives the Solicitation message from UE-1, it may choose to setup a direct communication link by sending the Response message directly to UE-1.

In step 5, UE-1 receives the Request Accept from Relay-1. UE-1 chooses a path according to policies (e.g., always choose direct path if it is possible), signal strength, etc. If UE-1 receives a Request Accept directly from UE-2, it may choose to setup a direct L2 link as described in clause 6.3.3 of TS 23.287. In this case, step 6 is skipped.

In step 6, UE-1 and UE-2 setup a communication link through chosen the UE-to-UE relay. The link setup information may vary depending on the type of relay, e.g., L2 or L3 relaying.

In order to make a relay or path selection in the embodiments shown in Figures 8A -8C, the requesting UE 30 can setup a timer after sending out the Direct Communication Request (or Solicitation message) for collecting the corresponding Request Accept (or Response) messages before making a decision. Similarly, the target UE 30 can also setup a timer after receiving the first copy of the Direct Communication Request (or Solicitation message) for collecting multiple copies of the message from different paths before making a decision.

The first time that a requesting UE 30 receives a message from a UE-to-UE relay, the requesting UE 30 may need to verify if the relay UE 30 is authorized be a UE-to-UE relay. Similarly, the UE-to-UE relay may also need to verify if the requesting UE 30 is authorized to use the relay service. The verification details and the how to secure the communication between two UEs 30 through a UE-to-UE relay can be defined by standard.

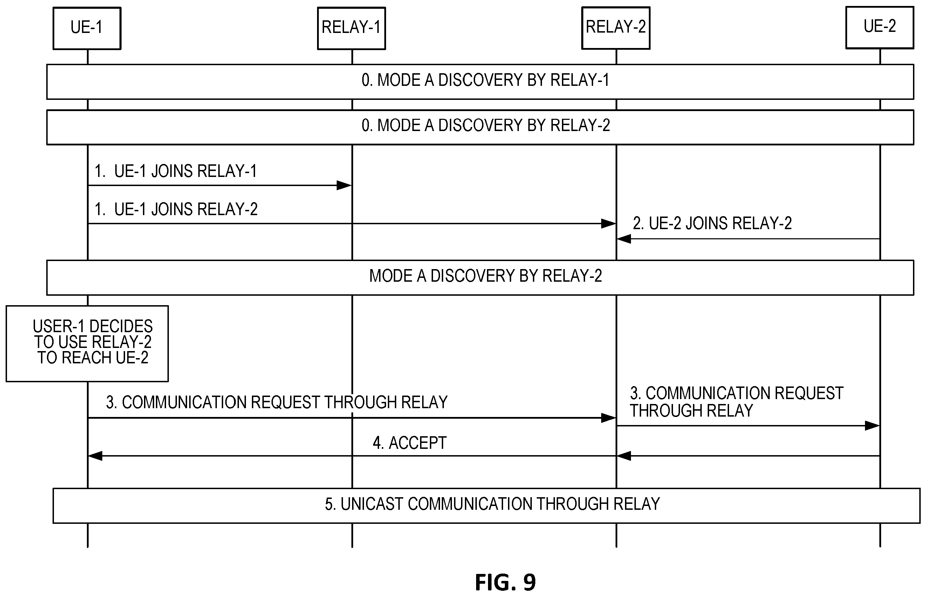

Figure 9 illustrates a procedure for unicast link establishment to a remote UE 30 with relay discovery. Each relay maintains a list of neighbor UEs 30 it can reach and periodically broadcasts an announcement to indicate its availability for relaying communications (step 0). The announcement includes an indication (e.g., the reachable neighbor list) of other UEs 30 that the relay UE 30 can reach. When a neighboring UE 30 within reach of the relay UE 30 receives the broadcast announcement, it can decide whether it wants to use the relay UE 30 to relay D2D communications. If so, the receiving UE 30 stores a copy of the reachable neighbor list for the relay UE 30 in its local memory sends a relay request to the relay UE 30. Upon receipt of the relay request, the relay UE 30 adds the requesting UE 30 to its reachable neighbor and sends the updated list in the next broadcast discovery message. When the requesting UE 30 wants to communicate with a remote UE 30, it can choose a relay UE 30 able to reach the remote UE 30 before it sends a Direct Communication Request. In this regard, choosing a relay UE 30 is equivalent to choosing a path because the relay UE 30 chosen is the first hop in the selected communication path.

In the example shown in Figure 9, it is assumed that UE-1 cannot directly communicate with UE-2. Relay-1 and Relay-2 can reach both UE-1 and UE-2. In step 0, Relay-1 and Relay-2 broadcast an announcement indicated their availability to relay communications. When UE-1 receives the broadcast message from Relay-1 and Relay-2, it decides to use both relay UEs 30 for D2D communications. At step 1, UE-1 sends a relay request to Relay-1 and Relay-2. When Relay-1 and Relay-2 receive the responses from UE-1, it adds UE-1 to its reachable neighbor list and sends the updated list in the next broadcast discovery. UE-2 likewise receives the announcement from Relay-2 and decides to use Relay-2. At step 2, UE-2 sends a relay request to Relay-2. When Relay-2 receives the responses from UE-2, it adds UE-1 and UE-2 to its reachable neighbor list and sends the updated list in the next broadcast discovery message. Each time the announcement is broadcast, the UEs 30 in the neighborhood of Relay-1 and Relay 2-will update their local copy of the reachable list for Relay-2 if it has changed since the last broadcast.

When a requesting UE 30 needs to send a communication to a remote UE 30, it selects a communication path based on its local copies of the neighbor lists stored in memory. Additional memory can also be stored, such as the signal strength of the relay (determined by measuring the broadcast announcement), the load of the relay (contained in the announcement, the QoS support provided by the relay (contained in the announcement), tec. There may be more than one communication path available so the requesting UE 30 select the communication path as previously described based on factors such as signal strength, load on the relay (included in the announcement message), QoS support by the relay (included in the announcement message), local policy (e.g., provided by an application or chipset design) or operator policies (pre-configured or provided via network signaling). In the example shown in Figure 9, UE-1 selects Relay-2 and sends a Direct Communication Request to Relay-2 at step 3. Relay-2 forwards the Direct Communication Request to the remote UE 30. At step 4, the remote UE 30 sends a Request Accept message to the requesting UE 30 via Relay-2. UE-1 and UE-2 then establish a unicast communication link via Relay-2 and begin communication.

A relay request or Direct Communication Request can be sent directly after reception of broadcast message from the relay, or it could be sent later. The relay UE 30 can include add a *validity_timer* parameter in the broadcast announcement message, which indicates how long the relay UE 30 will accept responses. When sending a broadcast announcement message, the relay UE 30 starts the *validity_timer* and processes responses until the expiration of this timer. When UE 30 receives the announcement message from a relay UE 30, it starts a *validity_timer* associated with that relay. If the UE 30 subsequently needs to establish a link with a UE 30 that can be reached via this relay, the UE 30 can send a request message to the relay if the *validity_timer* has not expired.

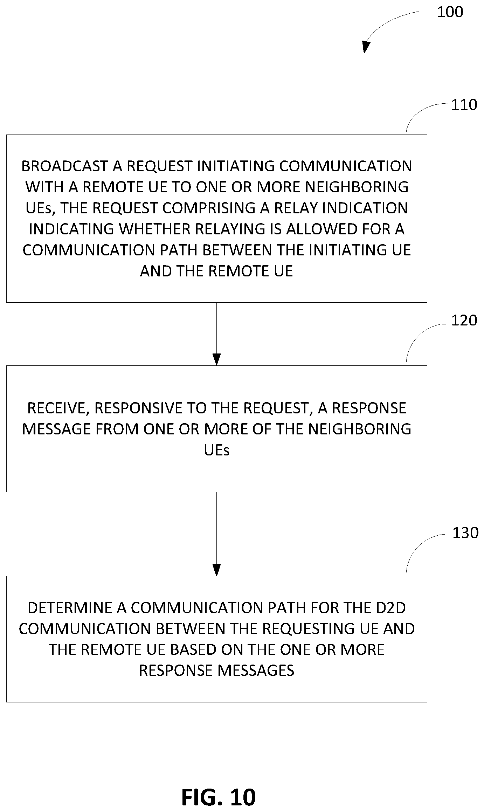

Figure 10 illustrates an exemplary method 100 implemented by requesting UE 30 for D2D communication. The requesting UE 30 broadcasts a request (e.g., Direct Communication Request or Solicitation message) initiating communication with a remote UE 30 to one or more neighboring UEs 30 (block 110). The request comprises a relay indication indicating whether relaying is allowed for a communication path between the requesting UE and the remote UE. According to the invention, the relay indication further indicates a maximum number of hops for the communication path. The requesting UE 30 further receives, responsive to the request, a response message (e.g., Request accept or Solicitation Response message) from one or more of the neighboring UEs 30 (block 120). The requesting UE 30 determines a communication path for the D2D communication between the requesting UE and the remote UE based on the one or more response messages (block 130).

In some embodiments of the method 100, the communication path is selected by a remote UE 30. The requesting UE 30 receives a single response message from a neighboring UE 30 and determines the communication path based on an identity of the neighboring UE 30 from which the response message is received.

In some embodiments of the method 100, the requesting UE 30 receives the single response message from a neighboring UE 30 serving as a relay and the determined communication path includes two or more hops from the requesting UE 30 to the resp UE 30.

In some embodiments of the method 100, the requesting UE 30 receives the single response message directly from the remote UE 30 and the determined communication path is a path between the requesting UE 30 and the remote UE 30.

In some embodiments of the method 100, the requesting UE 30 receives a response message from each of one or more neighboring UE 30; and selects the communication path based on the one or more response messages received by the requesting UE 30.

In some embodiments of the method 100, the UE 30 selects a path from the requesting UE 30 to the remote UE 30 when it receives a response message directly from the remote UE 30.

In some embodiments of the method 100, the requesting UE 30 selects the communication path based on path selection information contained in the one or more response messages.

In some embodiments of the method 100, the path selection information comprises at least one of channel quality information; load information, or device capability information.

In some embodiments of the method 100, the requesting UE 30 determines the communication path based on one or more of the response messages received in a predetermined time prior after broadcasting the request.

Some embodiments of the method 10 further comprises communicating with the remote UE 30 using the determined communication path.

In some embodiments of the method 100, the request message comprises a Direct Communication Request and the response message comprises a Request accept message.

In some embodiments of the method 100, the request message comprises a Solicitation message and the response message comprises a Response message.

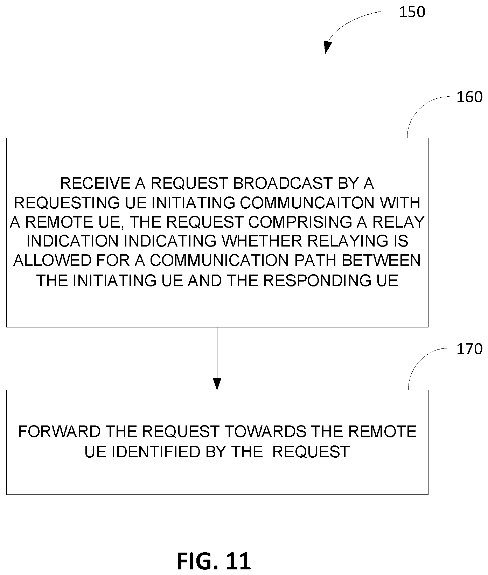

Figure 11 illustrates an exemplary method 150 implemented by relay UE 30 for relaying D2D communication between a requesting UE 30 and a remote UE 30. The relay UE 30 receives a request (e.g., Direct Communication Request or Solicitation message) broadcast by a requesting UE initiating communication with a remote UE 30 (block 160). The request comprises a relay indication indicating whether relaying is allowed for a communication path between the requesting UE and the remote UE. According to the invention, the relay indication further indicates a maximum number of hops for the communication path. The relay UE 30 further forwards the request towards the remote UE (block 170).

In some embodiments of the method 150, forwarding the request towards the remote UE 30 comprises forwarding the request depending on a value of the relay indication.

In some embodiments of the method 150, forwarding the request towards the remote UE 30 is further dependent on at least one of a Quality of Service (QoS) requirement for the request, a load of the UE 30, or a channel quality of a communication link between the UE 30 and the requesting UE 30.

In some embodiments of the method 150, the UE 30 forwards the request when the value of the relay indication is greater than a predetermined value.

Some embodiments of the method 150 further comprise discarding the request when the relay indication equals the predetermined value.

Some embodiments of the method 150 further comprise decrementing the value of the relay indication in the request by a predetermined amount prior to forwarding the request.

Some embodiments of the method 150 further comprise relaying D2D communications between the requesting UE 30 and the remote UE 30. with the remote UE 30 using the determined communication path.

In some embodiments of the method 150, the request message comprises a Direct Communication Request and the response message comprises a Request accept message.

In some embodiments of the method 150, the request message comprises a Solicitation message and the response message comprises a Response message.

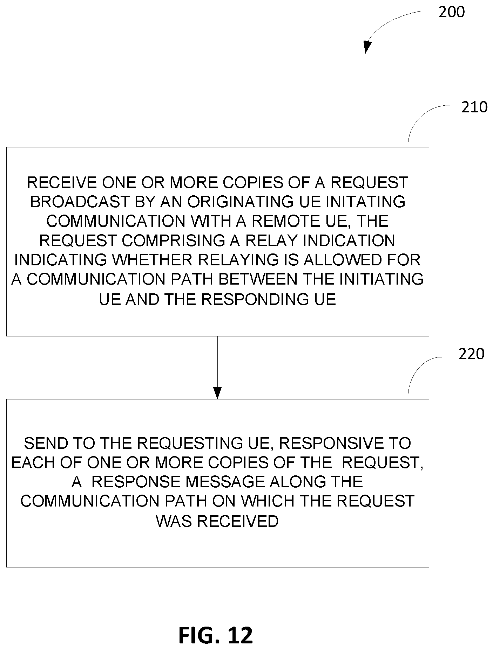

Figure 12 illustrates an exemplary method 200 implemented by remote UE 30 for D2D communication. The remote UE 30 receives one or more copies of a request (e.g., Direct Communication Request or Solicitation message) broadcast by a requesting UE 30 initiating communication with a remote UE 30 (block 210). The request comprises a relay indication indicating whether relaying is allowed for a communication path between the requesting UE 30 and the remote UE 30. According to the invention, the relay indication further indicates a maximum number of hops for the communication path. The remote UE 30 further sends to the requesting UE 30, responsive to each of one or more copies of the request, a response message (e.g., Request Accept or Solicitation Response message) along the communication path on which the request was received (block 220).

Some embodiments of the method 200 further comprise selecting a communication path for D2D communication between the requesting UE 30 and the remote UE 30.

In some embodiments of the method 200, sending, responsive to each of one or more copies of the request, a response message comprises sending a single response message along the selected communication path.

Some embodiments of the method 200 further comprise receiving multiple copies of the request along respective communication paths between the requesting UE 30 and remote UE 30, wherein sending, responsive to each of one or more copies of the request, a response message comprises sending multiple response messages to the UE 30 along respective ones of the communication paths.

In some embodiments of the method 200, the response messages are sent in response to requests received in a predetermined time window.

Some embodiments of the method 200 further comprise communicating with the remote UE 30 using one of the communication paths selected by the requesting UE 30 or remote UE 30.

In some embodiments of the method 200, the request message comprises a Direct Communication Request and the response message comprises a Request accept message.

In some embodiments of the method 200, the request message comprises a Solicitation message and the response message comprises a Response message.

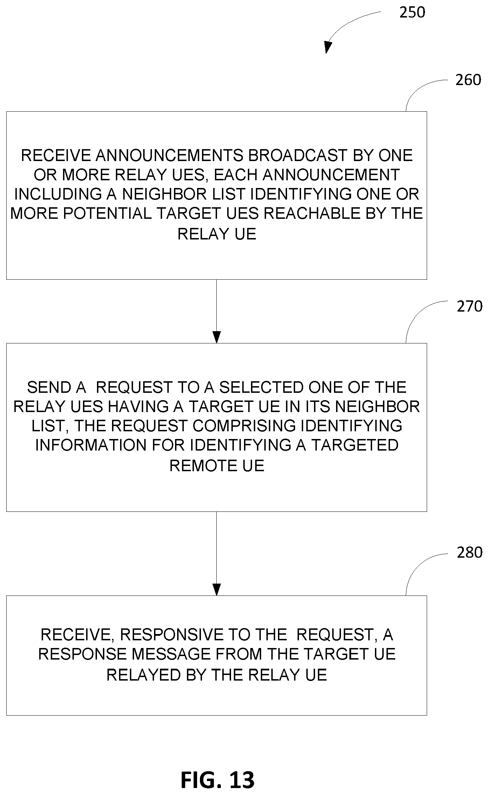

Figure 13 illustrates an exemplary method 250 implemented by requesting UE 30 configured for D2D communication. The requesting UE 30 receives announcements broadcast by one or more relay UEs 30 (block 260). Each announcement includes a neighbor list identifying one or more potential remote UEs reachable by the relay UE 30. The requesting UE 30 further sends a request (e.g., Direct Communication Request or Solicitation message) to a selected one of the relay UEs 30 having a remote UE 30 in its neighbor list (block 270). The request comprises identifying information for identifying a targeted remote UE 30. The requesting UE 30 further receives, responsive to the request, a response message (e.g., Request Accept message or Solicitation Response message) from the remote UE relayed by the relay UE 30 (block 280).

In some embodiments of the method 250, sending a request to one of the neighboring UEs having a remote UE 30 in its neighbor list comprises selecting a communication path from the requesting UE 30 to the remote UE 30, the communication path including one of the neighboring UEs, and sending the request to the neighboring UE 30 on the selected communication path.

In some embodiments of the method 250, selecting a communication path from the requesting UE 30 to the remote UE 30 is based at least in part on one of channel quality information indicating channel quality between the UE 30 and the neighboring UEs, load information for the neighboring UEs, or device capability information for the neighboring UEs.

In some embodiments of the method 250, one or more of the announcements include a time parameter indicating time period during which the neighboring UE 30 will accept requests.

In some embodiments of the method 250, sending a request to one of the neighboring UEs comprises sending the request during the indicated time period.

Some embodiments of the method 250 further comprise communicating with the remote UE 30 using the determined communication path.

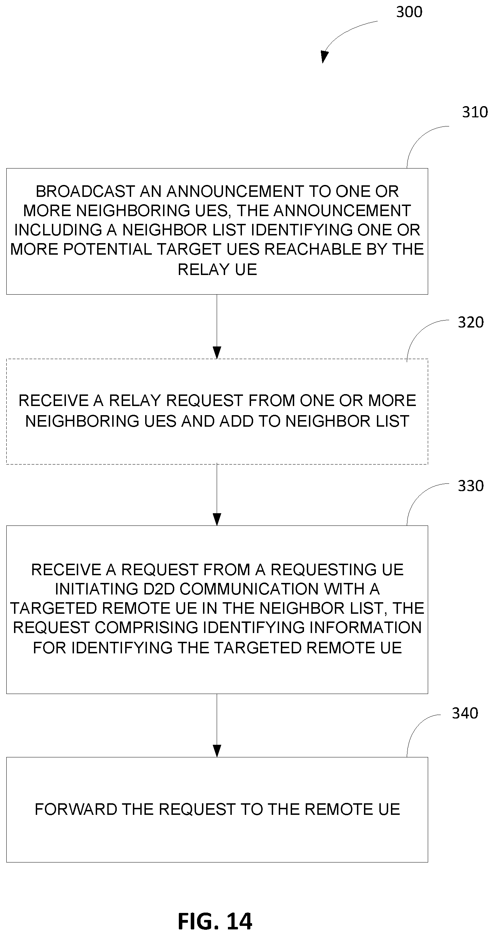

Figure 14 illustrates an exemplary method 300 implemented by relay UE 30 for relaying D2D communication between a requesting UE 30 and a remote UE 30. The relay UE 30 broadcasts an announcement to one or more neighboring UEs 30 (block 310). The announcement includes a neighbor list identifying one or more potential remote UEs 30 reachable by the relay UE 30. The announcement can be broadcast periodically. In some embodiments, the relay UE 30 receives a relay request from one or more neighboring UEs 30 requesting the relay UE 30 to serves as a UE-to-UE relay (block 320). The relay UE 300 adds these neighboring UEs 30 to its neighbor list and broadcasts the updated list in the next broadcast interval. The relay UE 30 further receives a request (e.g., Direct Communication Request or Solicitation message) from a requesting UE initiating D2D communication with a remote UE 30 in the neighbor list (block 330). The request comprises identifying information for identifying a targeted remote UE 30. The relay UE 30 further forwards the request to the remote UE identified by the request (block 340).

Some embodiments of the method 300 further comprise receiving, responsive to the announcement, one or more relay requests from different ones of the neighboring UEs, and adding the neighboring UEs 30 that sent the relay requests to the neighbor list for subsequent announcements.

In some embodiments of the method 300, forwarding the requests towards the remote UE 30 comprises forwarding the requests received in a predetermined time period following the announcement.

Some embodiments of the method 300 further comprise receiving, responsive to the request, a response message from the remote UE 30, and forward the response message to the requesting UE 30.

In some embodiments of the method 300, the announcement includes a time parameters indicating a time period for accepting the request from the requesting UE 30.

Some embodiments of the method 300 further comprise relaying D2D communications between the requesting UE 30 and the remote UE 30.

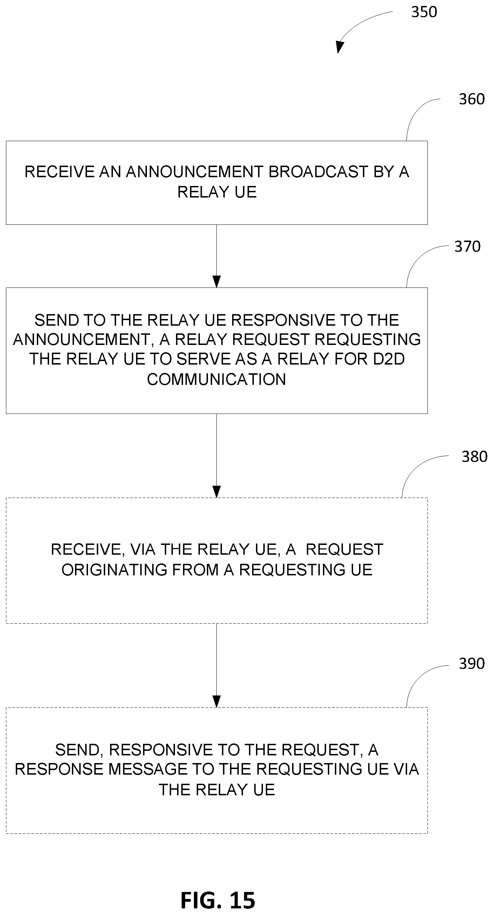

Figure 15 illustrates an exemplary method 350 implemented by remote UE 30 for D2D communication. The remote UE 30 receives an announcement broadcast by a relay UE 30 (block 360). The remote UE 30 further sends to the relay UE 30 responsive to the announcement, a relay request requesting the relay UE 30 to serve as a relay for D2D communication (block 370). In some embodiments, the remote UE 30 may further receive, via the relay UE, a request (e.g., Direct Communication Request or Solicitation message) originating from a requesting UE (block 380). The remote UE 30 may further send, responsive to the request, a response message (e.g., Request Accept message or Solicitation Response message) to the requesting UE via the relay UE (block 390).

Some embodiments of the method 350 further comprise receiving, via the relay UE 30, a request originating from a requesting UE 30, and sending, responsive to the request, a response message to the requesting UE 30 via the relay UE 30.

In some embodiments of the method 350, the announcement includes a time parameter indicating time period during which the relay UE 30 will accept the request to join the group.

In some embodiments of the method 350, sending a relay request comprises sending the relay request during the time period indicated in the announcement.

Some embodiments of the method 350 further comprise communicating with the requesting UE 30 using one of the communication paths selected by the requesting UE 30 or remote UE 30.

An apparatus can perform any of the methods herein described by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

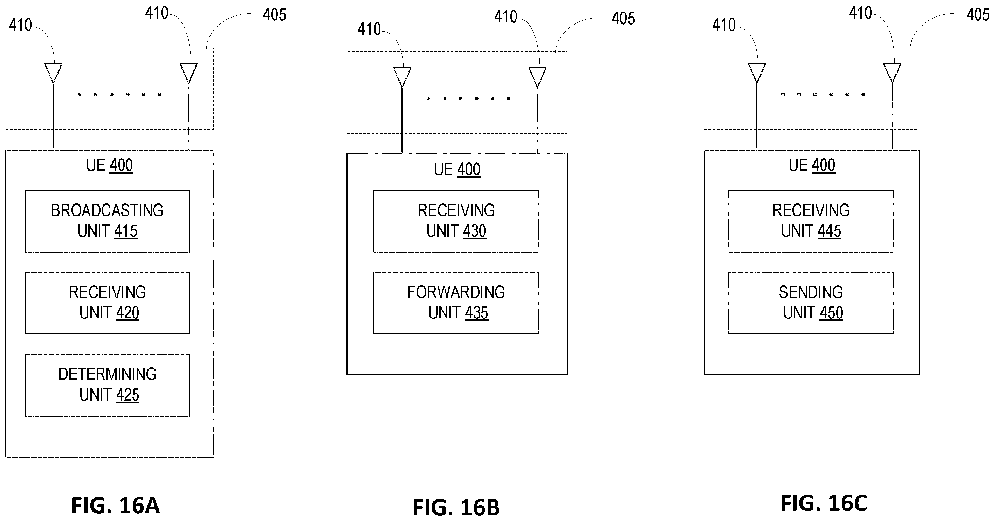

Figures 16A -16C illustrate exemplary embodiments of a UE 400 configured for D2D communication. In each of the embodiments shown in Figures 16A - 16C, the UE 400 comprises an antenna array 405 including one or more antenna 410 for communicating with a base station 20 and with other UEs 400. The UE 400 can be configured to function as a requesting UE, a relay UE, a remote UE, or any combination thereof.

Figure 16A illustrates functional components of a requesting UE 400. The requesting UE 400, shown in Figure 16A, comprises a broadcasting unit 415, a receiving unit 420 and a determining unit 425. The various units 415-425 may be implemented by one or more microprocessors, hardware circuits, firmware, or a combination thereof. The broadcasting unit 415 is configured to broadcast a request (e.g., Direct Communication Request or Solicitation message) initiating communication with a remote UE 30 to one or more neighboring UEs 30. The request comprises a relay indication indicating whether relaying is allowed for a communication path between the requesting UE and the remote UE. According to the invention, the relay indication further indicates a maximum number of hops for the communication path. The receiving unit 420 is configured to receive, responsive to the request, a response message (e.g., Request Accept message or Solicitation Response message) from one or more of the neighboring UEs 30. The determining unit 425 is configured to determine a communication path for the D2D communication between the requesting UE and the remote UE based on the one or more response messages.

Figure 16B shows the functional components of a relay UE 400. The relay UE 400, shown in Figure 16B, further comprises a receiving unit 430 and a forwarding unit 435. The various units 430-435 may be implemented by one or more microprocessors, hardware circuits, firmware, or a combination thereof. The receiving unit 430 is configured to receives a request (e.g., Direct Communication Request or Solicitation message) broadcast by a requesting UE initiating communication with a remote UE 30. The request comprises a relay indication indicating whether relaying is allowed for a communication path between the requesting UE and the remote UE. According to the invention, the relay indication further indicates a maximum number of hops for the communication path. The forwarding unit 435 is configured to forward the request towards the remote UE.

Figure 16C illustrates the functional components of a remote UE 400. The remote UE 400, shown in Figure 16C, further comprises a receiving unit 445 and a sending unit 450. The various units 445-450 may be implemented by one or more microprocessors, hardware circuits, firmware, or a combination thereof. The receiving unit 445 is configured to receive one or more copies of a request (e.g., Direct Communication Request or Solicitation message) broadcast by a requesting UE initiating communication with a remote UE 30. The request comprises a relay indication indicating whether relaying is allowed for a communication path between the requesting UE 30 and the remote UE 30. According to the invention, the relay indication further indicates a maximum number of hops for the communication path. The sending unit 450 is configured to further send to the requesting UE, responsive to each of one or more copies of the request, a response message (e.g., Request Accept message or Solicitation Response message) along the communication path on which the request was received.

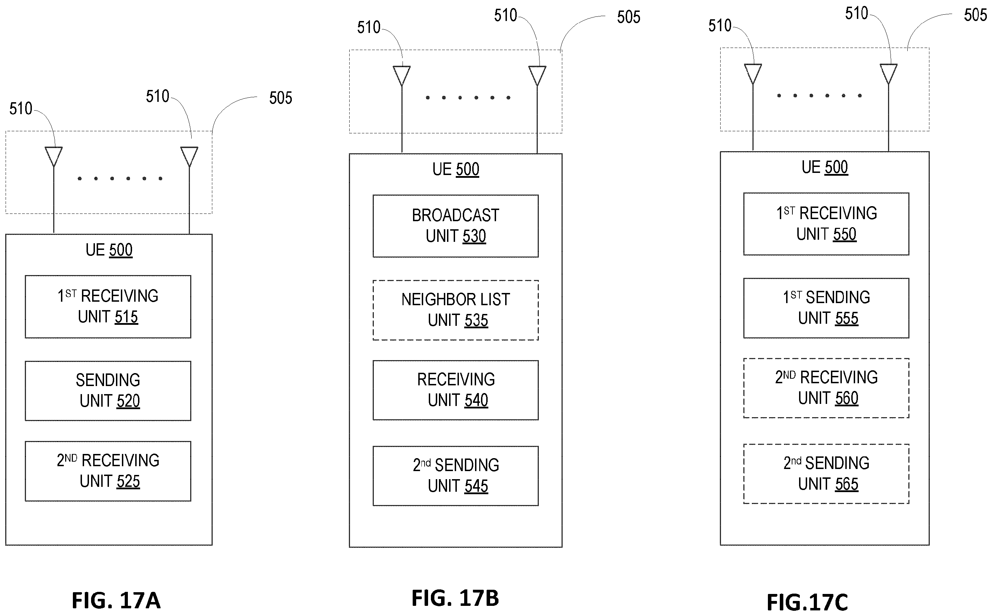

Figures 17A -17C illustrate exemplary embodiments of a UE 500 configured for D2D communication. In each of the embodiments shown in Figures 17A-17C, the UE 500 comprises an antenna array 505 including one or more antenna 510 for communicating with a base station 20. The UE 500 can be configured to function as a requesting UE, a relay UE, a remote UE, or any combination thereof.

Figure 17A shows the functional components of a requesting UE 500. The requesting UE 500, shown in Figure 17A, further comprises a first receiving unit 515, a sending unit 520 and a second receiving unit 525. The various units 515-525 may be implemented by one or more microprocessors, hardware circuits, firmware, or a combination thereof. The first receiving unit 515 is configured to receive announcements broadcast by one or more relay UEs 30. Each announcement includes a neighbor list identifying one or more potential remote UEs reachable by the relay UE 30. The sending unit 520 is configured to send a request (e.g., Direct Communication Request or Solicitation message) to a selected one of the relay UEs 30 having a remote UE 30 in its neighbor list, the request comprising identifying information (e.g., UE ID) for identifying a targeted remote UE. The second receiving unit 525 is configured to receive, responsive to the request, a response message (e.g., Request Accept message or Solicitation Response message) from the remote UE 30 relayed by the relay UE 30.

Figure 17B shows the functional components of a relay UE 500. The relay UE 500, shown in Figure 17B, further comprises a broadcast unit 530, a neighbor list unit 535, a second receiving unit 540, and a forwarding unit 545. The various units 530-545 may be implemented by one or more microprocessors, hardware circuits, firmware, or a combination thereof. The broadcast unit 530 is configured to broadcast an announcement to one or more neighboring UEs 30. The announcement includes a neighbor list identifying one or more potential remote UEs 30 reachable by the relay UE 30. The announcement can be broadcast periodically. In embodiments including the neighbor list unit 535, the relay UE 30 receives a relay request from one or more neighboring UEs 30 requesting the relay UE 30 to serves as a UE-to-UE relay and adds these neighboring UEs 30 to its neighbor list (block 320). The broadcast 530 broadcasts the updated list in the next broadcast interval. The receiving unit 540 is configured to receive a request (e.g., Direct Communication Request or Solicitation message) from a requesting UE initiating D2D communication with a remote UE in the neighbor list. The request comprises identifying information (e.g., UE ID) for identifying a targeted remote UE 30. The forwarding unit 545 is configured to forward the request to the remote UE 30 identified by the request.

Figure 17C shows the functional components of a remote UE 500. The remote UE 500, shown in Figure 17C, further comprises a first receiving unit 550, a first sending unit 555, a second receiving unit 560 and a second sending unit 565. The various units 550-565 may be implemented by one or more microprocessors, hardware circuits, firmware, or a combination thereof. The first receiving unit 550 is configured to receives an announcement broadcast by a relay UE 30. The first sending unit 555 is configured to sends to the relay UE 30 responsive to the announcement, a relay request requesting the relay UE 30 to serve as a relay for D2D communication. The second receiving unit 560 is configured to receive, via the relay UE 30, a request (e.g., Direct Communication Request or Solicitation message) originating from a requesting UE 30. The second sending unit 565 is configured to send, responsive to the request, a response message (e.g., Request Accept message or Solicitation Response message) to the requesting UE 30 via the relay UE 30.

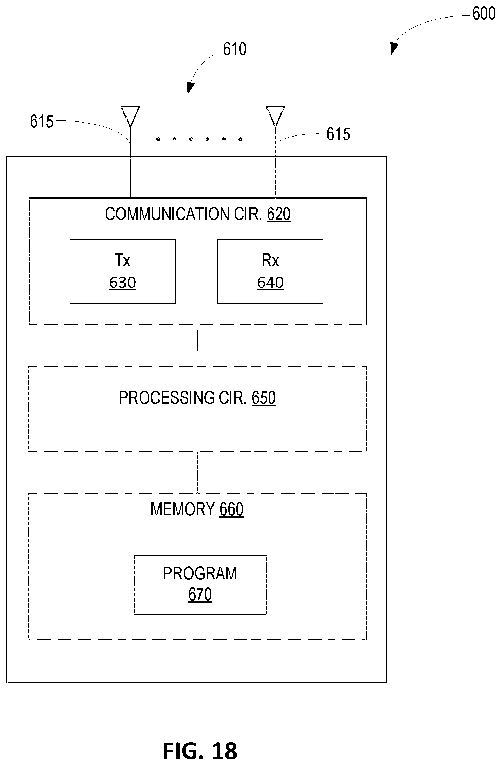

Figure 18 illustrates a UE 600 according to another embodiment. The UE 600 comprises an antenna array 610 having one or multiple antennas 615, communication circuitry 620, processing circuitry 660, and memory 640.

The communication circuitry 620 is coupled to the antennas 610 and comprises the radio frequency (RF) circuitry (e.g., transmitter (Tx) 630 and receiver (Rx) 640) needed for transmitting and receiving signals over a wireless communication channel. The processing circuitry 650 controls the overall operation of the UE 600 according to program instructions stored in memory 660. The processing circuitry 650 may comprise one or more microprocessors, hardware, firmware, or a combination thereof.

Memory 660 comprises both volatile and non-volatile memory for storing computer program code and data needed by the processing circuitry 650 for operation. Memory 660 may comprise any tangible, non-transitory computer-readable storage medium for storing data including electronic, magnetic, optical, electromagnetic, or semiconductor data storage. Memory 660 stores a computer program 670 comprising executable instructions that configure the processing circuitry 650 to implement one or more of the methods 100, 150, 200, 250, 300, 350 according to Figures 10-15 respectively as described herein. A computer program 670 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 650 for configuring the processing circuitry 650 as herein described may be stored in a removable memory, such as a portable compact disc, portable digital video disc, or other removable media. The computer program 670 may also be embodied in a carrier such as an electronic signal, optical signal, radio signal, or computer readable storage medium.

Those skilled in the art will also appreciate that embodiments herein further include corresponding computer programs. A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

## Claims

1. A method (100) for device-to-device, D2D, communication, the method (100) comprising:
a requesting user equipment, UE, (30, 400, 600) broadcasting (110) a Direct Communication Request initiating communication with a remote UE (30, 400, 600) to one or more neighboring UEs, the Direct Communication Request comprising a relay indication indicating whether relaying is allowed for a communication path between the requesting UE (30, 400, 600) and the remote UE (30, 400, 600) and having a value set by the requesting UE (30, 400, 600) to a maximum number of relays allowed for the communication path, wherein the Direct Communication Request is forwarded by a UE (30, 400, 600) if the value of the relay indication in the Direct Communication request as received by the UE (30, 400, 600) is greater than zero and the value of the relay indication is decreased with each forwarding of the Direct Communication Request;
the requesting UE (30, 400, 600) receiving (120), responsive to the Direct Communication Request, a response message from one or more of the neighboring UEs; and
the requesting UE (30, 400, 600) determining (130) a communication path for the D2D communication between the requesting UE (30, 400, 600) and the remote UE (30, 400, 600) based on the one or more response messages.

2. The method (100) of claim 1 wherein the communication path is selected by the remote UE (30, 400, 600) and the requesting UE (30, 400, 600):
receives a single response message from a neighboring UE (30, 400, 600); and
determines the communication path based on an identity of the neighboring UE (30, 400, 600) from which the response message is received.

3. The method (100) of claim 2 wherein the requesting UE (30, 400, 600) receives the single response message from a neighboring UE (30, 400, 600) serving as a relay and the determined communication path includes two or more hops from the requesting UE (30, 400, 600) to the remote UE (30, 400, 600) or the requesting UE (30, 400, 600) receives the single response message directly from the remote UE (30, 400, 600) and the determined communication path is a path between the requesting UE (30, 400, 600) and the remote UE (30, 400, 600).

4. The method (100) of claim 1 wherein the requesting UE (30, 400, 600):
receives a response message from each of the one or more neighboring UEs; and
selects the communication path based on the one or more response messages received by the requesting UE (30, 400, 600).

5. The method (100) of claim 4 wherein the UE (30, 400, 600) selects a path from the requesting UE (30, 400, 600) to the remote UE (30, 400, 600) when it receives a response message directly from the remote UE (30, 400, 600).

6. The method (100) of claim 4 wherein the requesting UE (30, 400, 600) selects the communication path based on path selection information contained in the one or more response messages, wherein the path selection information comprises at least one of channel quality information; load information, or device capability information.

7. The method (100) of any one of claims 1 - 6 wherein the requesting UE (30, 400, 600) determines the communication path based on one or more of the response messages received in a predetermined time prior after broadcasting the Direct Communication Request.

8. A method (150) for device-to-device, D2D, communications, the method (150) comprising:
a user equipment, UE, (30, 400, 600), receiving (160) a Direct Communication Request broadcast by a requesting UE (30, 400, 600) initiating communication with a remote UE (30, 400, 600), the Direct Communication Request comprising a relay indication indicating whether relaying is allowed for a communication path between the requesting UE (30, 400, 600) and the remote UE (30, 400, 600) and having a value set by the requesting UE (30, 400, 600) to a maximum number of relays allowed for the communication path, wherein the value of the relay indication is decreased with each forwarding of the Direct Communication Request; and
the UE (30, 400, 600) forwarding (170) the Direct Communication Request towards the remote UE (30, 400, 600) if the value of the relay indication in the Direct Communication Request as received by the UE (30, 400, 600) is greater than zero.

9. The method (150) of claim 8 wherein forwarding the Direct Communication Request towards the remote UE (30, 400, 600) is further dependent on at least one of a Quality of Service, QoS, requirement for the Direct Communication Request, a load of the UE (30, 400, 600), or a channel quality of a communication link between the UE (30, 400, 600) and the requesting UE (30, 400, 600).

10. A user equipment, UE, (30, 400, 600) capable of device-to-device, D2D, communication, the UE (30, 400, 600) being configured to:
receive a Direct Communication Request broadcast by a requesting UE (30, 400, 600) initiating communication with a remote UE (30, 400, 600), the Direct Communication Request comprising a relay indication indicating whether relaying is allowed for a communication path between the requesting UE (30, 400, 600) and the remote UE (30, 400, 600) and having a value set by the requesting UE (30, 400, 600) to a maximum number of relays allowed for the communication path, wherein the value of the relay indication is decreased with each forwarding of the Direct Communication Request; and
forward the Direct Communication Request towards the remote UE (30, 400, 600) if the value of the relay indication in the received Direct Communication Request is greater than zero.

11. The UE (30, 400, 600) of claim 10 further configured to forward the Direct Communication Request towards the remote UE (30, 400, 600) further depending on at least one of a Quality of Service, QoS, requirement for the Direct Communication Request, a load of the UE (30, 400, 600), or a channel quality of a communication link between the UE (30, 400, 600) and the requesting UE (30, 400, 600).

12. A computer program (670) comprising executable instructions that, when executed by a processing circuit in a user equipment, UE, (30, 400, 600) in a wireless communication network, causes the UE (30, 400, 600) to perform the method of any one of claims -8 or 9.

13. A method (200) for device-to-device, D2D, communications, the method (200) comprising:
a remote user equipment, UE, (30, 400, 600) receiving (210) one or more copies of a Direct Communication Request broadcast by a requesting UE (30, 400, 600) initiating communication with the remote UE (30, 400, 600), the Direct Communication Request comprising a relay indication indicating whether relaying is allowed for a communication path between the requesting UE (30, 400, 600) and the remote UE (30, 400, 600) and having a value set by the requesting UE (30, 400, 600) to a maximum number of relays allowed for the communication path, wherein the Direct Communication Request is forwarded by a UE (30, 400, 600) if the value of the relay indication in the Direct Communication Request as received by the UE (30, 400, 600) is greater than zero and the value of the relay indication is decreased with each forwarding of the Direct Communication Request; and
the remote UE (30, 400, 600) sending (220) to the requesting UE (30, 400, 600), responsive to each of the one or more copies of the Direct Communication Request, a response message along the communication path on which the Direct Communication Request was received.

14. The method (200) of claim 13 wherein the remote UE (30, 400, 600) further selects a communication path for D2D communication between the requesting UE (30, 400, 600) and the remote UE (30, 400, 600), wherein sending the response message responsive to each of the one or more copies of the Direct Communication Request comprises sending a single response message along the selected communication path.

15. The method (200) of claim 13,
wherein receiving (210) the one or more copies of the Direct Communication Request comprises receiving multiple copies of the Direct Communication Request along respective communication paths between the requesting UE (30, 400, 600) and remote UE (30, 400, 600); and
wherein sending the response message responsive to each of the one or more copies of the Direct Communication Request comprises sending multiple response messages to the UE (30, 400, 600) along respective ones of the communication paths.

16. A system, comprising:
a requesting user equipment, UE, (30, 400, 600) capable of device-to-device, D2D, communication, and a further UE (30, 400, 600) according to claim 10;
the requesting UE (30, 400, 600) being configured to:
broadcast a Direct Communication Request initiating communication with a remote UE (30, 400, 600), the Direct Communication Request comprising a relay indication indicating whether relaying is allowed for a communication path between the requesting UE (30, 400, 600) and the remote UE (30, 400, 600) and having a value set by the requesting UE (30, 400, 600) to a maximum number of relays allowed for the communication path, wherein the value of the relay indication is decreased with each forwarding of the Direct Communication Request,
receive, responsive to the Direct Communication Request, a response message from one or more of the neighboring UEs (30, 400, 600), and
determine a communication path for the D2D communication between the requesting UE (30, 400, 600) and the remote UE (30, 400, 600) based on the one or more response messages; and
the further UE (30, 400, 600) being configured to:
receive the Direct Communication Request and forward the Direct Communication Request towards the remote UE (30, 400, 600) if the value of the relay indication in the Direct Communication Request as received by the further UE (30, 400, 600) is greater than zero.

17. The system of claim 16, further comprising the remote UE (30, 400, 600), wherein the remote UE (40, 400, 600) is configured to:
receive one or more copies of the Direct Communication Request, and
send to the requesting UE (30, 400, 600), responsive to each of the one or more copies of the Direct Communication Request, a response message along the communication path on which the Direct Communication Request was received.

## Patentansprüche

1. Verfahren (100) für Vorrichtung-zu-Vorrichtung-, D2D (Device-to-Device), Kommunikation, wobei das Verfahren (100) Folgendes umfasst:
eine anfragende Benutzerausrüstung, UE (User Equipment), (30, 400, 600), die eine Direktkommunikationsanfrage (Direct Communication Request) an eine oder mehrere benachbarte UEs aussendet (110), die Kommunikation mit einer ferngelegenen UE (30, 400, 600) einleitet, wobei die Direktkommunikationsanfrage eine Relaisangabe umfasst, die angibt, ob Vermittlung für einen Kommunikationspfad zwischen der anfragenden UE (30, 400, 600) und der ferngelegenen UE (30, 400, 600) zulässig ist, und einen Wert aufweist, der von der anfragenden UE (30, 400, 600) auf eine maximale Anzahl von Relais festgelegt wird, die für den Kommunikationspfad zulässig sind, wobei die Direktkommunikationsanfrage von einer UE (30, 400, 600) weitergeleitet wird, falls der Wert der Relaisangabe in der Direktkommunikationsanfrage, wie sie von der UE (30, 400, 600) empfangen wird, größer als null ist, und der Wert der Relaisangabe mit jeder Weiterleitung der Direktkommunikationsanfrage verringert wird;
Empfangen (120), durch die anfragende UE (30, 400, 600), in Antwort auf die Direktkommunikationsanfrage, einer Antwortnachricht von einer oder mehreren der benachbarten UEs; und
Bestimmen (130), durch die anfragende UE (30, 400, 600), eines Kommunikationspfads für die D2D-Kommunikation zwischen der anfragenden UE (30, 400, 600) und der ferngelegenen UE (30, 400, 600) basierend auf der einen oder den mehreren Antwortnachrichten.

2. Verfahren (100) nach Anspruch 1, wobei der von der ferngelegenen UE (30, 400, 600) und der anfragenden UE (30, 400, 600) ausgewählte Kommunikationspfad:
eine einzelne Antwortnachricht von einer benachbarten UE (30, 400, 600) empfängt; und
den Kommunikationspfad basierend auf einer Identität der benachbarten UE (30, 400, 600) bestimmt, von der die Antwortnachricht empfangen wird.

3. Verfahren (100) nach Anspruch 2, wobei die anfragende UE (30, 400, 600) die einzelne Antwortnachricht von einer benachbarten UE (30, 400, 600) empfängt, die als ein Relais dient, und der bestimmte Kommunikationspfad zwei oder mehr Hops von der anfragenden UE (30, 400, 600) zu der ferngelegenen UE (30, 400, 600) beinhaltet oder die anfragende UE (30, 400, 600) die einzelne Antwortnachricht direkt von der ferngelegenen UE (30, 400, 600) empfängt und der bestimmte Kommunikationspfad ein Pfad zwischen der anfragenden UE (30, 400, 600) und der ferngelegenen UE (30, 400, 600) ist.

4. Verfahren (100) nach Anspruch 1, wobei die anfragende UE (30, 400, 600) :
eine Antwortnachricht von jeder der einen oder mehreren benachbarten UEs empfängt; und
den Kommunikationspfad basierend auf der einen oder den mehreren Antwortnachrichten auswählt, die von der anfragenden UE (30, 400, 600) empfangen werden.

5. Verfahren (100) nach Anspruch 4, wobei die UE (30, 400, 600) einen Pfad von der anfragenden UE (30, 400, 600) zu der ferngelegenen UE (30, 400, 600) auswählt, wenn sie eine Antwortnachricht direkt von der ferngelegenen UE (30, 400, 600) empfängt.

6. Verfahren (100) nach Anspruch 4, wobei die anfragende UE (30, 400, 600) den Kommunikationspfad basierend auf den Pfadauswahlinformationen auswählt, die in der einen oder den mehreren Antwortnachrichten enthalten sind, wobei die Pfadauswahlinformationen mindestens eine von Kanalqualitätsinformationen; Lastinformationen oder Vorrichtungskapazitätsinformationen umfassen.

7. Verfahren (100) nach einem der Ansprüche 1 - 6, wobei die anfragende UE (30, 400, 600) den Kommunikationspfad basierend auf einer oder mehreren der Antwortnachrichten bestimmt, die in einer vorgegebenen Zeit zuvor nach Aussenden der Direktkommunikationsanfrage empfangen werden.

8. Verfahren (150) für Vorrichtung-zu-Vorrichtung-, D2D, Kommunikationen, wobei das Verfahren (150) Folgendes umfasst:
Empfangen (160), durch eine Benutzerausrüstung, UE, (30, 400, 600), einer Direktkommunikationsanfrageaussendung durch eine anfragende UE (30, 400, 600), die Kommunikation mit einer ferngelegenen UE (30, 400, 600) einleitet, wobei die Direktkommunikationsanfrage eine Relaisangabe umfasst, die angibt, ob Vermittlung für einen Kommunikationspfad zwischen der anfragenden UE (30, 400, 600) und der ferngelegenen UE (30, 400, 600) zulässig ist, und einen Wert aufweist, der von der anfragenden UE (30, 400, 600) auf eine maximale Anzahl von Relais festgelegt wird, die für den Kommunikationspfad zulässig ist, wobei der Wert der Relaisangabe mit jeder Weiterleitung der Direktkommunikationsanfrage verringert wird; und
Weiterleiten (170), durch die UE (30, 400, 600), der Direktkommunikationsanfrage an die ferngelegene UE (30, 400, 600), wenn der Wert der Relaisangabe in der Direktkommunikationsanfrage, wie er von der UE (30, 400, 600) empfangen wird, größer als null ist.

9. Verfahren (150) nach Anspruch 8, wobei Weiterleitung der Direktkommunikationsanfrage an die ferngelegene UE (30, 400, 600) weiter von mindestens einer von einer Dienstqualitäts-, QoS (Quality of Service), Anforderung für die Direktkommunikationsanfrage, einer Last der UE (30, 400, 600) oder einer Kanalqualität eines Kommunikationslinks zwischen der UE (30, 400, 600) und der anfragenden UE (30, 400, 600) abhängt.

10. Benutzerausrüstung, UE, (30, 400, 600), die zur Vorrichtung-zu-Vorrichtung-, D2D, Kommunikation fähig ist, wobei die UE (30, 400, 600) für Folgendes konfiguriert ist:
Empfangen einer Direktkommunikationsanfrageaussendung durch eine anfragende UE (30, 400, 600), die Kommunikation mit einer ferngelegenen UE (30, 400, 600) einleitet, wobei die Direktkommunikationsanfrage eine Relaisangabe umfasst, die angibt, ob Vermittlung für einen Kommunikationspfad zwischen der anfragenden UE (30, 400, 600) und der ferngelegenen UE (30, 400, 600) zulässig ist, und einen Wert aufweist, der von der anfragenden UE (30, 400, 600) auf eine maximale Anzahl von Relais festgelegt wird, die für den Kommunikationspfad zulässig ist, wobei der Wert der Relaisangabe mit jeder Weiterleitung der Direktkommunikationsanfrage verringert wird; und
Weiterleiten der Direktkommunikationsanfrage an die ferngelegene UE (30, 400, 600), wenn der Wert der Relaisangabe in der Direktkommunikationsanfrage größer als null ist.

11. UE (30, 400, 600) nach Anspruch 10, die weiter dazu konfiguriert ist, die Direktkommunikationsanfrage an die ferngelegene UE (30, 400, 600) weiter abhängig von mindestens einem von einer Dienstqualitäts-, QoS, Anforderung für die Direktkommunikationsanfrage, einer Last der UE (30, 400, 600) oder einer Kanalqualität eines Kommunikationslinks zwischen der UE (30, 400, 600) und der anfragenden UE (30, 400, 600) weiterzuleiten.

12. Computerprogramm (670), das ausführbare Anweisungen umfasst, die, wenn sie von einer Verarbeitungsschaltung in einer Benutzerausrüstung, UE, (30, 400, 600) in einem drahtlosen Kommunikationsnetzwerk ausgeführt werden, die UE (30, 400, 600) dazu veranlassen, das Verfahren nach einem der Ansprüche 8 oder 9 durchzuführen.

13. Verfahren (200) für Vorrichtung-zu-Vorrichtung-, D2D, Kommunikationen, wobei das Verfahren (200) Folgendes umfasst:
Empfangen (210), durch eine ferngelegene Benutzerausrüstung, UE, (30, 400, 600), einer oder mehrerer Kopien einer Direktkommunikationsanfrageaussendung von einer anfragenden UE (30, 400, 600), die Kommunikation mit der ferngelegenen UE (30, 400, 600) einleitet, wobei die Direktkommunikationsanfrage eine Relaisangabe umfasst, die angibt, ob Vermittlung für einen Kommunikationspfad zwischen der anfragenden UE (30, 400, 600) und der ferngelegenen UE (30, 400, 600) zulässig ist, und einen Wert aufweist, der von der anfragenden UE (30, 400, 600) auf eine maximale Anzahl von Relais festgelegt wird, die für den Kommunikationspfad zulässig ist, wobei die Direktkommunikationsanfrage von einer UE (30, 400, 600) weitergeleitet wird, falls der Wert der Relaisangabe in der Direktkommunikationsanfrage, wie er von der UE (30, 400, 600) empfangen wird, größer als null ist, und der Wert der Relaisangabe mit jeder Weiterleitung der Direktkommunikationsanfrage verringert wird; und
Senden (220), durch die ferngelegene UE (30, 400, 600), an die anfragende UE (30, 400, 600), in Antwort auf jede der einen oder mehreren Kopien der Direktkommunikationsanfrage, einer Antwortnachricht entlang des Kommunikationspfads, auf dem die Direktkommunikationsanfrage empfangen wurde.

14. Verfahren (200) nach Anspruch 13, wobei die ferngelegene UE (30, 400, 600) weiter einen Kommunikationspfad für D2D-Kommunikation zwischen der anfragenden UE (30, 400, 600) und der ferngelegenen UE (30, 400, 600) auswählt, wobei Senden der Antwortnachricht in Antwort auf jede der einen oder mehreren Kopien der Direktkommunikationsanfrage Senden einer einzelnen Antwortnachricht entlang des ausgewählten Kommunikationspfads umfasst.

15. Verfahren (200) nach Anspruch 13,
wobei Empfangen (210) der einen oder mehreren Kopien der Direktkommunikationsanfrage Empfangen mehrerer Kopien der Direktkommunikationsanfrage entlang jeweiliger Kommunikationspfade zwischen der anfragenden UE (30, 400, 600) und ferngelegenen UE (30, 400, 600) umfasst; und
wobei Senden der Antwortnachricht in Antwort auf jede der einen oder mehreren Kopien der Direktkommunikationsanfrage Senden mehrerer Antwortnachrichten an die UE (30, 400, 600) entlang jeweiliger der Kommunikationspfade umfasst.

16. System, umfassend:
eine anfragende Benutzerausrüstung, UE, (30, 400, 600), die zu Vorrichtung-zu-Vorrichtung-, D2D, Kommunikation fähig ist, und eine weitere UE (30, 400, 600) nach Anspruch 10;
wobei die anfragende UE (30, 400, 600) für Folgendes konfiguriert ist:
Aussenden einer Direktkommunikationsanfrage, die Kommunikation mit einer ferngelegenen UE (30, 400, 600) einleitet, wobei die Direktkommunikationsanfrage eine Relaisangabe umfasst, die angibt, ob Vermittlung für einen Kommunikationspfad zwischen der anfragenden UE (30, 400, 600) und der ferngelegenen UE (30, 400, 600) zulässig ist, und einen Wert aufweist, der von der anfragenden UE (30, 400, 600) auf eine maximale Anzahl von Relais festgelegt wird, die für den Kommunikationspfad zulässig ist, wobei der Wert der Relaisangabe mit jeder Weiterleitung der Direktkommunikationsanfrage verringert wird,
Empfangen, in Antwort auf die Direktkommunikationsanfrage, einer Antwortnachricht von einer oder mehreren der benachbarten UEs (30, 400, 600), und
Bestimmen eines Kommunikationspfads für die D2D-Kommunikation zwischen der anfragenden UE (30, 400, 600) und der ferngelegenen UE (30, 400, 600) basierend auf der einen oder den mehreren Antwortnachrichten; und
die weitere UE (30, 400, 600) für Folgendes konfiguriert ist:
Empfangen der Direktkommunikationsanfrage und Weiterleiten der Direktkommunikationsanfrage an die ferngelegene UE (30, 400, 600), wenn der Wert der Relaisangabe in der Direktkommunikationsanfrage, wie er von der weiteren UE (30, 400, 600) empfangen wird, größer als null ist.

17. System nach Anspruch 16, das weiter die ferngelegene UE (30, 400, 600) umfasst, wobei die ferngelegene UE (40, 400, 600) für Folgendes konfiguriert ist:
Empfangen einer oder mehrerer Kopien der Direktkommunikationsanfrage, und
Senden, an die anfragende UE (30, 400, 600), in Antwort auf jede der einen oder mehreren Kopien der Direktkommunikationsanfrage, einer Antwortnachricht entlang des Kommunikationspfads, auf dem die Direktkommunikationsanfrage empfangen wurde.

## Revendications

1. Procédé (100) de communication de dispositif à dispositif, D2D, le procédé (100) comprenant :
par un équipement utilisateur, UE, (30, 400, 600) demandeur, la diffusion (110) d'une demande de communication directe initiant une communication avec un UE (30, 400, 600) distant à un ou plusieurs UE voisins, la demande de communication directe comprenant une indication de relais indiquant si des relais sont ou non autorisés pour un trajet de communication entre l'UE (30, 400, 600) demandeur et l'UE (30, 400, 600) distant et présentant une valeur définie par l'UE (30, 400, 600) demandeur à un nombre maximal de relais autorisés pour le trajet de communication, dans lequel la demande de communication directe est transférée par un UE (30, 400, 600) si la valeur de l'indication de relais dans la demande de communication directe telle que reçue par l'UE (30, 400, 600) est supérieure à zéro et la valeur de l'indication de relais est diminuée à chaque transfert de la demande de communication directe ;
par l'UE (30, 400, 600) demandeur, la réception (120), en réponse à la demande de communication directe, d'un message de réponse depuis un ou plusieurs des UE voisins ; et
par l'UE (30, 400, 600) demandeur, la détermination (130) d'un trajet de communication pour la communication D2D entre l'UE (30, 400, 600) demandeur et l'UE (30, 400, 600) distant sur la base des un ou plusieurs messages de réponse.

2. Procédé (100) selon la revendication 1, dans lequel le trajet de communication est sélectionné par l'UE (30, 400, 600) distant et l'UE (30, 400, 600) demandeur :
reçoit un message de réponse unique depuis un UE (30, 400, 600) voisin ; et
détermine le trajet de communication sur la base d'une identité de l'UE (30, 400, 600) voisin en provenance duquel le message de réponse est reçu.

3. Procédé (100) selon la revendication 2, dans lequel l'UE (30, 400, 600) demandeur reçoit le message de réponse unique depuis un UE (30, 400, 600) voisin servant de relais et le trajet de communication déterminé inclut deux sauts ou plus depuis l'UE (30, 400, 600) demandeur jusqu'à l'UE (30, 400, 600) distant ou l'UE (30, 400, 600) demandeur reçoit le message de réponse unique directement depuis l'UE (30, 400, 600) distant et le trajet de communication déterminé est un trajet entre l'UE (30, 400, 600) demandeur et l'UE (30, 400, 600) distant.

4. Procédé (100) selon la revendication 1, dans lequel l'UE (30, 400, 600) demandeur :
reçoit un message de réponse depuis chacun des un ou plusieurs UE voisins ; et
sélectionne le trajet de communication sur la base des un ou plusieurs messages de réponse reçus par l'UE (30, 400, 600) demandeur.

5. Procédé (100) selon la revendication 4, dans lequel l'UE (30, 400, 600) sélectionne un trajet depuis l'UE (30, 400, 600) demandeur jusqu'à l'UE (30, 400, 600) distant lorsqu'il reçoit un message de réponse directement depuis l'UE (30, 400, 600) distant.

6. Procédé (100) selon la revendication 4, dans lequel l'UE (30, 400, 600) demandeur sélectionne le trajet de communication sur la base d'informations de sélection de trajet contenues dans les un ou plusieurs messages de réponse, dans lequel les informations de sélection de trajet comprennent au moins l'une parmi des informations de qualité de canal, des informations de charge et des informations de capacité de dispositif.

7. Procédé (100) selon l'une quelconque des revendications 1 à 6, dans lequel l'UE (30, 400, 600) demandeur détermine le trajet de communication sur la base d'un ou plusieurs des messages de réponse reçus au cours d'un temps prédéterminé après la diffusion de la demande de communication directe.

8. Procédé (150) de communication de dispositif à dispositif, D2D, le procédé (150) comprenant :
par un équipement utilisateur, UE, (30, 400, 600) demandeur, la réception (160) d'une demande de communication directe diffusée par un UE (30, 400, 600) demandeur initiant une communication avec un UE (30, 400, 600) distant, la demande de communication directe comprenant une indication de relais indiquant si des relais sont ou non autorisés pour un trajet de communication entre l'UE (30, 400, 600) demandeur et l'UE (30, 400, 600) distant et présentant une valeur définie par l'UE (30, 400, 600) demandeur à un nombre maximal de relais autorisés pour le trajet de communication, dans lequel la valeur de l'indication de relais est diminuée à chaque transfert de la demande de communication directe ; et
par l'UE (30, 400, 600), le transfert (170) de la demande de communication directe à l'UE (30, 400, 600) distant si la valeur de l'indication de relais dans la demande de communication directe telle que reçue par l'UE (30, 400, 600) est supérieure à zéro.

9. Procédé (150) selon la revendication 8, dans lequel le transfert de la demande de communication directe à l'UE (30, 400, 600) distant dépend en outre d'au moins l'une parmi une exigence de qualité de service, QoS, pour la demande de communication directe, une charge de l'UE (30, 400, 600), et une qualité de canal d'une liaison de communication entre l'UE (30, 400, 600) et l'UE (30, 400, 600) demandeur.

10. Equipement utilisateur, UE, (30, 400, 600) capable de réaliser une communication de dispositif à dispositif, D2D, l'UE (30, 400, 600) étant configuré pour :
recevoir une demande de communication directe diffusée par un UE (30, 400, 600) demandeur initiant une communication avec un UE (30, 400, 600) distant, la demande de communication directe comprenant une indication de relais indiquant si des relais sont ou non autorisés pour un trajet de communication entre l'UE (30, 400, 600) demandeur et l'UE (30, 400, 600) distant et présentant une valeur définie par l'UE (30, 400, 600) demandeur à un nombre maximal de relais autorisés pour le trajet de communication, dans lequel la valeur de l'indication de relais est diminuée à chaque transfert de la demande de communication directe ; et
transférer la demande de communication directe à l'UE (30, 400, 600) distant si la valeur de l'indication de relais dans la demande de communication directe reçue est supérieure à zéro.

11. UE (30, 400, 600) selon la revendication 10, configuré en outre pour transférer la demande de communication directe à l'UE (30, 400, 600) distant en fonction en outre d'au moins l'une parmi une exigence de qualité de service, QoS, pour la demande de communication directe, une charge de l'UE (30, 400, 600), et une qualité de canal d'une liaison de communication entre l'UE (30, 400, 600) et l'UE (30, 400, 600) demandeur.

12. Programme informatique (670) comprenant des instructions exécutables qui, lorsqu'elles sont exécutées par un circuit de traitement dans un équipement utilisateur, UE, (30, 400, 600) dans un réseau de communication sans fil, amènent l'UE (30, 400, 600) à réaliser le procédé selon la revendication 8 ou 9.

13. Procédé (200) de communication de dispositif à dispositif, D2D, le procédé (200) comprenant :
par un équipement utilisateur, UE, (30, 400, 600) distant, la réception (210) d'une ou plusieurs copies d'une demande de communication directe diffusée par un UE (30, 400, 600) demandeur initiant une communication avec l'UE (30, 400, 600) distant, la demande de communication directe comprenant une indication de relais indiquant si des relais sont ou non autorisés pour un trajet de communication entre l'UE (30, 400, 600) demandeur et l'UE (30, 400, 600) distant et présentant une valeur définie par l'UE (30, 400, 600) demandeur à un nombre maximal de relais autorisés pour le trajet de communication, dans lequel la demande de communication directe est transférée par un UE (30, 400, 600) si la valeur de l'indication de relais dans la demande de communication directe telle que reçue par l'UE (30, 400, 600) est supérieure à zéro et la valeur de l'indication de relais est diminuée à chaque transfert de la demande de communication directe ; et
par l'UE (30, 400, 600) distant, l'envoi (220), à l'UE (30, 400, 600) demandeur, en réponse à chacune des ou plusieurs copies de la demande de communication directe, d'un message de réponse le long du trajet de communication sur lequel la demande de communication directe a été reçue.

14. Procédé (200) selon la revendication 13, dans lequel l'UE (30, 400, 600) distant sélectionne en outre un trajet de communication pour une communication D2D entre l'UE (30, 400, 600) demandeur et l'UE (30, 400, 600) distant, dans lequel l'envoi du message de réponse en réponse à chacune des une ou plusieurs copies de la demande de communication directe comprend l'envoi d'un message de réponse unique le long du trajet de communication sélectionné.

15. Procédé (200) selon la revendication 13,
dans lequel la réception (210) des une ou plusieurs copies de la demande de communication directe comprend la réception de multiples copies de la demande de communication directe le long de trajets de communication respectifs entre l'UE (30, 400, 600) demandeur et l'UE (30, 400, 600) distant ; et
dans lequel l'envoi du message de réponse en réponse à chacune des une ou plusieurs copies de la demande de communication directe comprend l'envoi de multiples messages de réponse à l'UE (30, 400, 600) le long de ceux respectifs des trajets de communication.

16. Système, comprenant :
un équipement utilisateur, UE, (30, 400, 600) demandeur capable de réaliser une communication de dispositif à dispositif, D2D, et un autre UE (30, 400, 600) selon la revendication 10 ;
l'UE (30, 400, 600) demandeur étant configuré pour :
diffuser une demande de communication directe initiant une communication avec un UE (30, 400, 600) distant, la demande de communication directe comprenant une indication de relais indiquant si des relais sont ou non autorisés pour un trajet de communication entre l'UE (30, 400, 600) demandeur et l'UE (30, 400, 600) distant et présentant une valeur définie par l'UE (30, 400, 600) demandeur à un nombre maximal de relais autorisés pour le trajet de communication, dans lequel la valeur de l'indication de relais est diminuée à chaque transfert de la demande de communication directe,
recevoir, en réponse à la demande de communication directe, un message de réponse depuis un ou plusieurs des UE (30, 400, 600) voisins ; et
déterminer un trajet de communication pour la communication D2D entre l'UE (30, 400, 600) demandeur et l'UE (30, 400, 600) distant sur la base des un ou plusieurs messages de réponse ; et
l'autre UE (30, 400, 600) étant configuré pour :
recevoir la demande de communication directe et transférer la demande de communication directe à l'UE (30, 400, 600) distant si la valeur de l'indication de relais dans la demande de communication directe telle que reçue par l'autre UE (30, 400, 600) est supérieure à zéro.

17. Système selon la revendication 16, comprenant en outre l'UE (30, 400, 600) distant, dans lequel l'UE (40, 400, 600) distant est configuré pour :
recevoir une ou plusieurs copies de la demande de communication directe, et
envoyer, à l'UE (30, 400, 600) demandeur, en réponse à chacune des ou plusieurs copies de la demande de communication directe, un message de réponse le long du trajet de communication sur lequel la demande de communication directe a été reçue.
